(19) Europäisches Patentamt
European Patent Office
Office européen des brevets

(11) **EP 4 697 052 A1**

(12) **EUROPEAN PATENT APPLICATION**
published in accordance with Art. 153(4) EPC

(43) Date of publication:
**18.02.2026 Bulletin 2026/08**

(21) Application number: **23938381.3**

(22) Date of filing: **22.05.2023**

(51) International Patent Classification (IPC):
**G01S 5/02** *(2010.01)*

(52) Cooperative Patent Classification (CPC):
**G01S 5/02**

(86) International application number:
**PCT/JP2023/018850**

(87) International publication number:
**WO 2024/241408 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **FUKUSHIMA, Hirofumi
Tokyo 100-8310 (JP)**
• **ITO, Toshihiro
Tokyo 100-8310 (JP)**

(74) Representative: **Pfenning, Meinig & Partner mbB
Patent- und Rechtsanwälte
Joachimsthaler Straße 10-12
10719 Berlin (DE)**

(54) **POSITIONING DEVICE AND POSITIONING METHOD**

(57)      There are included a plurality of signal receiving units (301) provided one by one for a plurality of satellites (1) to acquire complex signal vectors of signals received by the satellites (1), a correlation processing unit (302) to calculate information of TDOA and FDOA by correlation processing between relevant complex signal vectors on a basis of the complex signal vectors acquired by the signal receiving units (301), a geolocation point calculating unit (303) to calculate a geolocation point corresponding to the TDOA and the FDOA on a basis of the information of the TDOA and the FDOA calculated by the correlation processing unit (302), a coordinate converting unit (306) to convert, on a basis of geolocation points calculated for a plurality of time periods by the geolocation point calculating unit (303), the geolocation points into information of latitude and longitude, a frequency distribution calculating unit (307) to calculate a frequency distribution of the geolocation point on a basis of the information of latitude and longitude obtained by the coordinate converting unit (306), a geolocation point extracting unit (308) to extract a geolocation point included in an area having a maximum frequency from the frequency distribution on a basis of the frequency distribution calculated by the frequency distribution calculating unit (307), and a position estimating unit to estimate a position of a target radio wave source (10) on a basis of the geolocation point extracted by the geolocation point extracting unit (308).

EP 4 697 052 A1

# FIG. 2

Positioning Device

**Description**

TECHNICAL FIELD

The present disclosure relates to a positioning device and a positioning method for positioning an unknown target radio wave source.

BACKGROUND ART

As positioning for an unknown target radio wave source using a satellite, a method has been originally used in which positioning is performed using information of a time difference of arrival (TDOA) and a frequency difference of arrival (FDOA) of signals after correlation processing between signals received by the satellite (for example, see Non Patent Literature 1).

On the other hand, when an unknown target radio wave source emits a radar wave represented by a pulse wave, a plurality of pieces of information of candidate TDOAs and FDOAs is generated. Therefore, in this case, ambiguity occurs in the positioning result, and it becomes difficult to estimate the position of a true target radio wave source.

As a countermeasure against this, a method has been proposed in which an array antenna for direction estimation is mounted on a satellite, ambiguity is removed using direction information, and a position of a target radio wave source is estimated (for example, see Non Patent Literature 2).

CITATION LIST

NON PATENT LITERATURES

Non Patent Literature 1: d. p. Haworth, "Interference localization for eutelsat satellites-the first european transmitter location system" International journal of satellite communications, vol. 15, 155-183 (1997).

Non Patent Literature 2: Amijima, Fukushima, Takahashi "Removal of Ambiguity in Radar Pulses Using DOA in TDOA/FDOA Geolocation Using Two Satellites," IEICE Technical Report SANE2022

SUMMARY OF INVENTION

TECHNICAL PROBLEM

As described above, in the method using the direction information, a geolocation point derived from the target radio wave source can be extracted from the plurality of ambiguities.

However, in this method, the direction information of the target radio wave source is required. Therefore, an increase in hardware scale and cost due to mounting of the array antenna for acquiring direction information is a problem.

The present disclosure has been made to solve the above problem, and an object thereof is to provide a positioning device capable of positioning an unknown target radio wave source without using direction information regardless of the type of the target radio wave source.

SOLUTION TO PROBLEM

A positioning device according to the present disclosure includes: a plurality of signal receiving units provided one by one for a plurality of satellites to acquire complex signal vectors of signals received by the satellites; a correlation processing unit to calculate information of TDOA and FDOA by correlation processing between relevant complex signal vectors on a basis of the complex signal vectors acquired by the signal receiving units; a geolocation point calculating unit to calculate a geolocation point corresponding to the TDOA and the FDOA on a basis of the information of the TDOA and the FDOA calculated by the correlation processing unit; a coordinate converting unit to convert, on a basis of geolocation points calculated for a plurality of time periods by the geolocation point calculating unit, the geolocation points into information of latitude and longitude; a frequency distribution calculating unit to calculate a frequency distribution of the geolocation point on a basis of the information of latitude and longitude obtained by the coordinate converting unit; a geolocation point extracting unit to extract a geolocation point included in an area having a maximum frequency from the frequency distribution on a basis of the frequency distribution calculated by the frequency distribution calculating unit; and a position estimating unit to estimate a position of a target radio wave source on a basis of the geolocation point extracted by the geolocation point extracting unit.

ADVANTAGEOUS EFFECTS OF INVENTION

According to the present disclosure, the above configuration enables positioning of an unknown target radio wave source without using direction information regardless of the type of the target radio wave source.

BRIEF DESCRIPTION OF DRAWINGS

FIG. 1 is a block diagram illustrating a schematic configuration example of a positioning system including a positioning device according to a first embodiment.
FIG. 2 is a block diagram illustrating a schematic configuration example of the positioning device according to the first embodiment.
FIG. 3 is a flowchart schematically illustrating an example of an operation procedure of the positioning device according to the first embodiment.
FIG. 4 is a diagram illustrating an example of a frequency distribution created by a frequency distribution calculating unit according to the first embodiment.
FIG. 5 is a diagram for describing an operation outline example of a geolocation point extracting unit in the first embodiment.
FIG. 6 is a diagram for describing a reason why a geolocation point extracting unit in the first embodiment extracts a geolocation point included in an area having a maximum frequency.
FIG. 7 is a diagram illustrating an example of a value of $\gamma^2$ used in an error ellipse calculating unit in the first embodiment and a probability of presence in an error ellipse of a geolocation point corresponding to each value.
FIG. 8 is a diagram illustrating an operation example of the error ellipse calculating unit in the first embodiment.
FIG. 9 is a diagram illustrating an operation example of a common part calculating unit in the first embodiment.
FIG. 10 is a block diagram illustrating a schematic configuration example of a positioning system including a positioning device according to a second embodiment.
FIG. 11 is a block diagram illustrating a schematic configuration example of the positioning device according to the second embodiment.
FIG. 12 is a flowchart schematically illustrating an example of an operation procedure of the positioning device according to the second embodiment.
FIG. 13 is a block diagram illustrating a schematic configuration example of a positioning system including a positioning device according to a third embodiment.
FIG. 14 is a block diagram illustrating a schematic configuration example of the positioning device according to the third embodiment.
FIG. 15 is a flowchart schematically illustrating an example of an operation procedure of the positioning device according to the third embodiment.
FIG. 16 is a block diagram schematically illustrating an example of a hardware configuration for implementing the positioning device according to the first to third embodiments.

DESCRIPTION OF EMBODIMENTS

Hereinafter, embodiments will be described in detail with reference to the drawings. Note that components denoted by the same reference numerals throughout the drawings have the same or similar configurations or functions.

First Embodiment

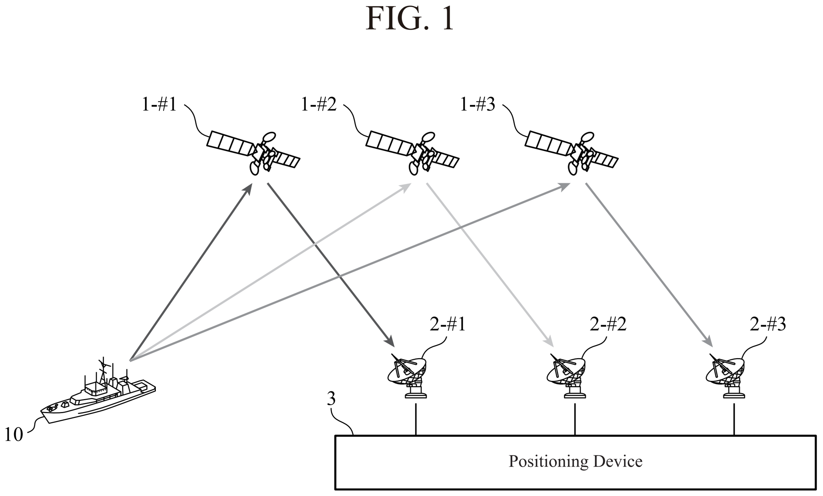

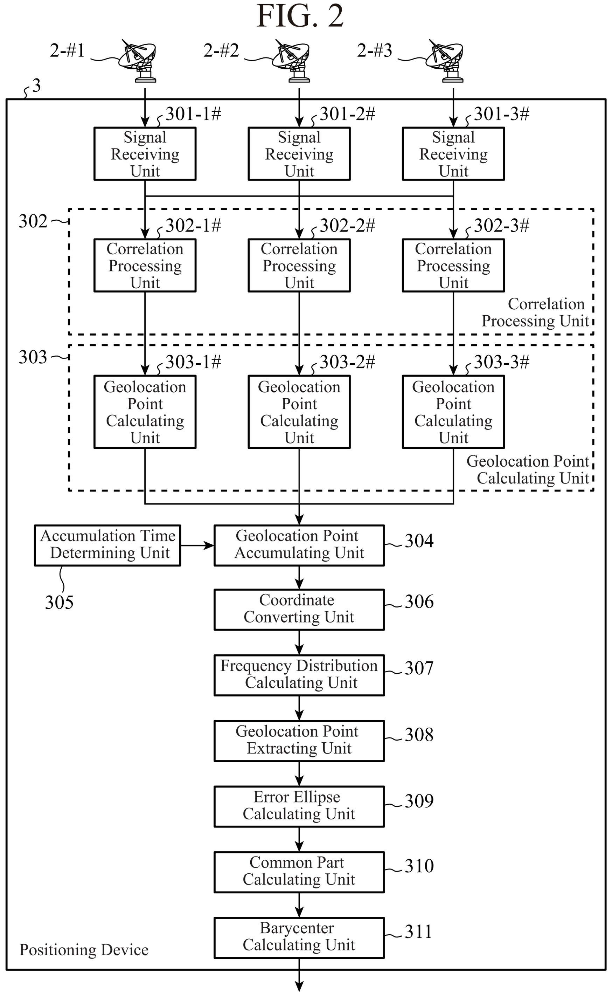

FIG. 1 is a block diagram illustrating a schematic configuration example of a positioning system including a positioning device 3 according to a first embodiment.
As illustrated in FIG. 1, the positioning system includes a plurality of satellites 1, a plurality of ground station antennas 2, and a positioning device 3. Further, FIG. 1 also illustrates a target radio wave source 10 as a positioning target in addition to the positioning system. The target radio wave source 10 is a radio wave source whose position is unknown.
Note that the ground station antennas 2 are provided in a number corresponding to the number of satellites 1. FIG. 2 illustrates a case where three satellites 1-#1 to 1-#3 are provided as the satellites 1, and three ground station antennas 2-#1 to 2-#3 are provided as the ground station antennas 2.
The satellite 1 receives a signal from the target radio wave source 10.
The signal received by the satellite 1 is transmitted to the ground station antenna 2.
In FIG. 1, the satellite 1-#1 receives the signal from the target radio wave source 10. The signal received by the satellite 1-#1 is transmitted to the ground station antenna 2-#1.

Further, the satellite 1-#2 receives the signal from the target radio wave source 10. The signal received by the satellite 1-#2 is transmitted to the ground station antenna 2-#2.

Further, the satellite 1-#3 receives the signal from the target radio wave source 10. The signal received by the satellite 1-#3 is transmitted to the ground station antenna 2-#3.

The ground station antenna 2 receives a signal received by the satellite 1.

The signal received by the ground station antenna 2 is transmitted to the positioning device 3.

In FIG. 1, the ground station antenna 2-#1 receives a signal received by the satellite 1-#1. The signal received by the ground station antenna 2-#1 is transmitted to the positioning device 3.

Further, the ground station antenna 2-#2 receives a signal received by the satellite 1-#2. The signal received by the ground station antenna 2-#2 is transmitted to the positioning device 3.

Further, the ground station antenna 2-#3 receives a signal received by the satellite 1-#3. The signal received by the ground station antenna 2-#3 is transmitted to the positioning device 3.

The positioning device 3 positions the target radio wave source 10 by using information of TDOA and FDOA calculated by correlation processing of signals received by the respective satellites 1. The positioning device 3 is applicable to various fields such as a radar system and a satellite communication system.

As illustrated in FIG. 2, the positioning device 3 includes a plurality of signal receiving units 301, a correlation processing unit 302, a geolocation point calculating unit 303, a geolocation point accumulating unit 304, an accumulation time determining unit 305, a coordinate converting unit 306, a frequency distribution calculating unit 307, a geolocation point extracting unit 308, an error ellipse calculating unit 309, a common part calculating unit 310, and a barycenter calculating unit 311.

Note that the signal receiving units 301 are provided in a number corresponding to the number of satellites 1. FIG. 2 illustrates a case where three signal receiving units 301-#1 to 301-#3 are provided as the signal receiving unit 301.

Further, in FIG. 2, the correlation processing unit 302 includes correlation processing units 302-#1 to 302-#3 corresponding to a set of satellites 1. Furthermore, in FIG. 2, the geolocation point calculating unit 303 includes geolocation point calculating units 303-#1 to 303-#3 corresponding to a set of satellites 1.

The signal receiving unit 301 acquires a complex signal vector of a signal received by the corresponding satellite 1 on the basis of a signal received by the corresponding ground station antenna 2.

Specifically, first, the signal receiving unit 301 generates an analog signal by executing various types of signal processing such as amplification processing, band pass processing (filter processing), and frequency conversion processing on the RF (high frequency) output of the ground station antenna 2. This analog signal is a complex signal having an in-phase component and a quadrature component. Then, the signal receiving unit 301 acquires a complex signal vector by converting the analog signal into a reception signal that is a complex signal in a digital format.

A signal indicating the complex signal vector acquired by the signal receiving unit 301 is output to the correlation processing unit 302.

In FIG. 2, the signal receiving unit 301-#1 acquires a complex signal vector $x_1(t)$ of a signal received by the satellite 1-#1 on the basis of a signal received by the ground station antenna 2-#1. A signal indicating the complex signal vector $x_1(t)$ acquired by the signal receiving unit 301-#1 is output to the correlation processing unit 302-#1 and the correlation processing unit 302-#3.

Further, the signal receiving unit 301-#2 acquires a complex signal vector $x_2(t)$ of the signal received by the satellite 1-#2 on the basis of the signal received by the ground station antenna 2-#2. A signal indicating the complex signal vector $x_2(t)$ acquired by the signal receiving unit 301-#2 is output to the correlation processing unit 302-#1 and the correlation processing unit 302-#2.

Further, the signal receiving unit 301-#3 acquires a complex signal vector $x_3(t)$ of the signal received by the satellite 1-#3 on the basis of the signal received by the ground station antenna 2-#3. A signal indicating the complex signal vector $x_3(t)$ acquired by the signal receiving unit 301-#3 is output to the correlation processing unit 302-#2 and the correlation processing unit 302-#3.

On the basis of complex signal vectors acquired by the respective signal receiving units 301, the correlation processing unit 302 calculates information of TDOA and FDOA by correlation processing between relevant complex signal vectors.

Specifically, the correlation processing unit 302 calculates information of TDOA and FDOA by extracting a peak value of a cross ambiguity function (CAF) according to the method described in Non Patent Literature 1 as correlation processing between the complex signal vectors. Note that, when the target radio wave source 10 is a radar wave source, there is a plurality of peak values of CAF, and as a result, information of a plurality of TDOAs and FDOAs is calculated.

A signal indicating the information of the TDOA and the FDOA calculated by the correlation processing unit 302 is output to the geolocation point calculating unit 303.

In FIG. 2, on the basis of the complex signal vector $x_1(t)$ acquired by the signal receiving unit 301-#1 and the complex signal vector $x_2(t)$ acquired by the signal receiving unit 301-#2, the correlation processing unit 302-#1 calculates

information of TDOA$\tau_{12(i)}$ and FDOAf$_{12(i)}$ by correlation processing between the complex signal vectors $x_1(t)$ and $x_2(t)$. Signals indicating the information of the TDOA$\tau_{12(i)}$ and the FDOAf$_{12(i)}$ calculated by the correlation processing unit 302-#1 are output to the geolocation point calculating unit 303-#1.

Further, on the basis of the complex signal vector $x_2(t)$ acquired by the signal receiving unit 301-#2 and the complex signal vector $x_3(t)$ acquired by the signal receiving unit 301-#3, the correlation processing unit 302-#2 calculates information of TDOA$\tau_{23(j)}$ and FDOAf$_{23(j)}$ by correlation processing between the complex signal vectors $x_2(t)$ and $x_3(t)$. Signals indicating the information of the TDOA$\tau_{23(j)}$ and the FDOAf$_{23(j)}$ calculated by the correlation processing unit 302-#2 are output to the geolocation point calculating unit 303-#2.

Further, on the basis of the complex signal vector $x_1(t)$ acquired by the signal receiving unit 301-#1 and the complex signal vector $x_3(t)$ acquired by the signal receiving unit 301-#3, the correlation processing unit 302-#3 calculates information of TDOA$\tau_{13(k)}$ and FDOAf$_{13(k)}$ by correlation processing between the complex signal vectors $x_1(t)$ and $x_3(t)$. Signals indicating the information of the TDOA$\tau_{13(k)}$ and the FDOAf$_{13(k)}$ calculated by the correlation processing unit 302-#3 are output to the geolocation point calculating unit 303-#3.

Note that i, j, and k each represent a positive integer. Assuming that each of the number of peak values of CAF calculated from the reception signal between the satellites 1-#1 to 1-#3 is $N_{12}$, $N_{23}$, and $N_{13}$, i, j, and k satisfy the ranges of $1 \leq i \leq N_{12}$, $1 \leq j \leq N_{23}$, and $1 \leq k \leq N_{13}$, respectively.

The geolocation point calculating unit 303 performs geolocation processing using the information of TDOA and FDOA calculated by the correlation processing unit 302 to obtain a geolocation point corresponding to the TDOA and FDOA.

A signal indicating the geolocation point calculated by the geolocation point calculating unit 303 is output to the geolocation point accumulating unit 304.

In FIG. 2, the geolocation point calculating unit 303 # 1 performs the geolocation processing using the information of TDOA$\tau_{12(i)}$ and FDOAf$_{12(i)}$ calculated by the correlation processing unit 302-#1 to obtain a geolocation point $p_{12(i)}$ corresponding to the TDOA$\tau_{12(i)}$ and the FDOAf$_{12(i)}$. A signal indicating the geolocation point $p_{12(i)}$ calculated by the geolocation point calculating unit 303-#1 is output to the geolocation point accumulating unit 304.

Further, the geolocation point calculating unit 303-#2 performs the geolocation processing using the information of TDOA$\tau_{23(j)}$ and FDOAf$_{23(j)}$ calculated by the correlation processing unit 302-#2 to obtain a geolocation point $p_{23(j)}$ corresponding to the TDOA$\tau_{23(j)}$ and the FDOAf$_{23(j)}$. A signal indicating the geolocation point $p_{23(j)}$ calculated by the geolocation point calculating unit 303-#2 is output to the geolocation point accumulating unit 304.

Further, the geolocation point calculating unit 303-#3 performs the geolocation processing using the information of TDOA$\tau_{13(k)}$ and FDOAf$_{13(k)}$ calculated by the correlation processing unit 302-#3 to obtain a geolocation point $p_{13(k)}$ corresponding to the TDOA$\tau_{13(k)}$ and the FDOAf$_{13(k)}$. A signal indicating the geolocation point $p_{13(k)}$ calculated by the geolocation point calculating unit 303-#3 is output to the geolocation point accumulating unit 304.

Note that the geolocation point calculating unit 303 calculates a geolocation point corresponding to a set of TDOA and FDOA. Therefore, in FIG. 2, the geolocation point calculating unit 303-#1 calculates $N_{12}$ geolocation points, the geolocation point calculating unit 303-#2 calculates $N_{23}$ geolocation points, and the geolocation point calculating unit 303-#3 calculates $N_{13}$ geolocation points.

The geolocation point accumulating unit 304 accumulates information indicating the geolocation point calculated by each geolocation point calculating unit 303.

When the accumulation time determining unit 305 determines that the elapsed accumulation time has not reached the accumulation time, the geolocation point accumulating unit 304 continues the accumulation. On the other hand, when the accumulation time determining unit 305 determines that the elapsed accumulation time has reached the accumulation time, the geolocation point accumulating unit 304 outputs a signal indicating the accumulated geolocation points to the coordinate converting unit 306.

In FIG. 2, the geolocation point accumulating unit 304 combines the geolocation point calculated by the geolocation point calculating unit 303-#1, the geolocation point calculated by the geolocation point calculating unit 303-#2, and the geolocation point calculated by the geolocation point calculating unit 303-#3 into one, and creates and accumulates a set of geolocation points $p_{all} = [p_{12(i)}, p_{23(j)},$ and $p_{13(k)}]$.

Then, when the accumulation time determining unit 305 determines that the elapsed accumulation time has not reached the accumulation time, the geolocation point accumulating unit 304 continues to accumulate $p_{all}$ and updates it as $p_{all-T}$. On the other hand, when the accumulation time determining unit 305 determines that the elapsed accumulation time has reached the accumulation time, the geolocation point accumulating unit 304 outputs a signal indicating the accumulated $p_{all-T}$ to the coordinate converting unit 306.

The accumulation time determining unit 305 determines whether the elapsed accumulation time by the geolocation point accumulating unit 304 has reached a preset accumulation time.

Specifically, when the time at which the geolocation point starts to be acquired is set to 0, the accumulation time determining unit 305 measures the elapsed time t from the acquisition, and determines whether the accumulation time T set in advance has been reached.

Note that FIG. 2 illustrates a case where the geolocation point accumulating unit 304 and the accumulation time determining unit 305 are provided inside the positioning device 3.

However, embodiments are not limited thereto, and the geolocation point accumulating unit 304 and the accumulation time determining unit 305 may be provided outside the positioning device 3.

The coordinate converting unit 306 converts the geolocation points indicated by the information accumulated by the geolocation point accumulating unit 304 for a plurality of time periods into latitude and longitude information.

Signals indicating the latitude and longitude information obtained by the coordinate converting unit 306 are output to the frequency distribution calculating unit 307.

In FIG. 2, the coordinate converting unit 306 converts the three-dimensional vector information of each of the geolocation points stored in $p_{all-T}$ accumulated for a plurality of hours by the geolocation point accumulating unit 304 into information $p_{all-T-latlon}$ of the latitude $\varphi$ and the longitude $\theta$. A signal indicating the information $p_{all-T-latlon}$ of the latitude $\varphi$ and the longitude $\theta$ obtained by the coordinate converting unit 306 is output to the frequency distribution calculating unit 307.

The frequency distribution calculating unit 307 calculates a frequency distribution of the geolocation point on the basis of the latitude and longitude information obtained by the coordinate converting unit 306. The frequency distribution of the geolocation points is a distribution for evaluating the degree of congestion of the geolocation points.

A signal indicating the frequency distribution calculated by the frequency distribution calculating unit 307 is output to the geolocation point extracting unit 308.

On the basis of the frequency distribution calculated by the frequency distribution calculating unit 307, the geolocation point extracting unit 308 extracts a geolocation point included in an area having a maximum frequency from the frequency distribution. The geolocation point extracted by the geolocation point extracting unit 308 is a candidate for a geolocation point derived from the target radio wave source 10.

A signal indicating the geolocation point extracted by the geolocation point extracting unit 308 is output to the error ellipse calculating unit 309.

In FIG. 2, on the basis of the frequency distribution calculated by the frequency distribution calculating unit 307, the geolocation point extracting unit 308 extracts geolocation points $p_{ext-12}$, $p_{ext-23}$, and $p_{ext-13}$ corresponding to a set of satellites 1-#1 to 1-#3 as geolocation points included in an area having a maximum frequency from the frequency distribution.

The error ellipse calculating unit 309 obtains, for each set of satellites 1, an error ellipse which is an area where there is a possibility that the geolocation point is present, on the basis of the geolocation point extracted by the geolocation point extracting unit 308.

A signal indicating the error ellipse calculated by the error ellipse calculating unit 309 is output to the common part calculating unit 310.

In FIG. 2, the error ellipse calculating unit 309 obtains an error ellipse which is an area where there is a possibility that the geolocation points $p_{ext-12}$, pext-23, and pext-13 are present for each set of satellites 1-#1 to 1-#3 on the basis of the geolocation points $p_{ext-12}$, $p_{ext-23}$, and $p_{ext-13}$ extracted by the geolocation point extracting unit 308. A signal indicating the error ellipse calculated by the error ellipse calculating unit 309 is output to the common part calculating unit 310.

On the basis of the error ellipse calculated by the error ellipse calculating unit 309, the common part calculating unit 310 extracts a geolocation point that is present in an overlapping area that is a common part of relevant error ellipses.

A signal indicating the geolocation point extracted by the common part calculating unit 310 is output to the barycenter calculating unit 311.

The barycenter calculating unit 311 sets the barycenter of the geolocation point as the position of the target radio wave source 10 on the basis of the geolocation point extracted by the common part calculating unit 310.

A signal indicating the position of the target radio wave source 10 estimated by the barycenter calculating unit 311 is output to the outside.

Note that the error ellipse calculating unit 309, the common part calculating unit 310, and the barycenter calculating unit 311 constitute "a position estimating unit that estimates a position of the target radio wave source 10 on the basis of the geolocation point extracted by the geolocation point extracting unit 308."

Further, FIG. 2 illustrates a case where the position estimating unit includes the error ellipse calculating unit 309, the common part calculating unit 310, and the barycenter calculating unit 311. However, embodiments are not limited thereto, and the position estimating unit only needs to be configured to estimate the position of the target radio wave source 10 on the basis of the geolocation point extracted by the geolocation point extracting unit 308.

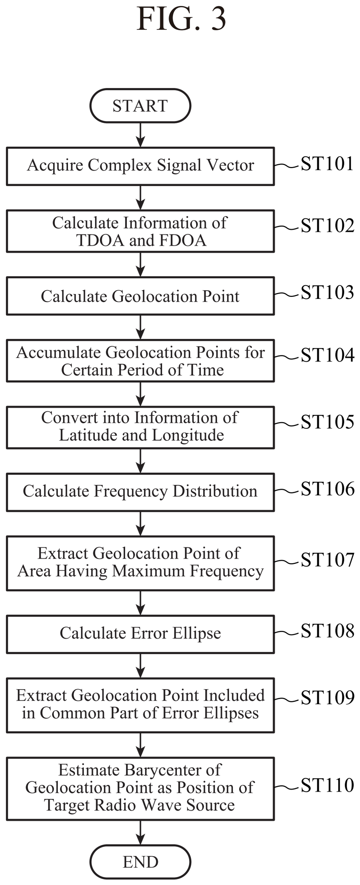

Next, an operation example of the positioning device 3 according to the first embodiment illustrated in FIG. 2 will be described with reference to FIG. 3.

In the operation example of the positioning device 3 according to the first embodiment illustrated in FIG. 2, as illustrated in FIG. 3, first, the signal receiving unit 301 acquires a complex signal vector of a signal received by the corresponding satellite 1 on the basis of a signal received by the corresponding ground station antenna 2 (step ST101).

Specifically, first, the signal receiving unit 301 generates an analog signal by executing various types of signal processing such as amplification processing, band pass processing (filter processing), and frequency conversion processing on the RF (high frequency) output of the ground station antenna 2. This analog signal is a complex signal having an in-phase component and a quadrature component. Then, the signal receiving unit 301 acquires a complex signal vector by converting the analog signal into a reception signal that is a complex signal in a digital format.

A signal indicating the complex signal vector acquired by the signal receiving unit 301 is output to the correlation processing unit 302.

In FIG. 2, the signal receiving unit 301-#1 acquires a complex signal vector $x_1(t)$ of a signal received by the satellite 1-#1 on the basis of a signal received by the ground station antenna 2-#1. A signal indicating the complex signal vector $x_1(t)$ acquired by the signal receiving unit 301-#1 is output to the correlation processing unit 302-#1 and the correlation processing unit 302-#3.

Further, the signal receiving unit 301-#2 acquires a complex signal vector $x_2(t)$ of the signal received by the satellite 1-#2 on the basis of the signal received by the ground station antenna 2-#2. A signal indicating the complex signal vector $x_2(t)$ acquired by the signal receiving unit 301-#2 is output to the correlation processing unit 302-#1 and the correlation processing unit 302-#2.

Further, the signal receiving unit 301-#3 acquires a complex signal vector $x_3(t)$ of the signal received by the satellite 1-#3 on the basis of the signal received by the ground station antenna 2-#3. A signal indicating the complex signal vector $x_3(t)$ acquired by the signal receiving unit 301-#3 is output to the correlation processing unit 302-#2 and the correlation processing unit 302-#3.

Next, the correlation processing unit 302 calculates information of TDOA and FDOA by correlation processing between the complex signal vectors on the basis of the complex signal vectors acquired by the respective signal receiving units 301 (step ST102).

Specifically, the correlation processing unit 302 calculates information of TDOA and FDOA by extracting a peak value of CAF according to the method described in Non Patent Literature 1 as correlation processing between the complex signal vectors. Note that, when the target radio wave source 10 is a radar wave source, there is a plurality of peak values of CAF, and as a result, information of a plurality of TDOAs and FDOAs is calculated.

A signal indicating the information of the TDOA and the FDOA calculated by the correlation processing unit 302 is output to the geolocation point calculating unit 303.

In FIG. 2, on the basis of the complex signal vector $x_1(t)$ acquired by the signal receiving unit 301-#1 and the complex signal vector $x_2(t)$ acquired by the signal receiving unit 301-#2, the correlation processing unit 302-#1 calculates information of TDOA$\tau_{12(i)}$ and FDOA$f_{12(i)}$ by correlation processing between the complex signal vectors $x_1(t)$ and $x_2(t)$. Signals indicating the information of the TDOA$\tau_{12(i)}$ and the FDOA$f_{12(i)}$ calculated by the correlation processing unit 302-#1 are output to the geolocation point calculating unit 303-#1.

Further, on the basis of the complex signal vector $x_2(t)$ acquired by the signal receiving unit 301-#2 and the complex signal vector $x_3(t)$ acquired by the signal receiving unit 301-#3, the correlation processing unit 302-#2 calculates information of TDOA$\tau_{23(j)}$ and FDOA$f_{23(j)}$ by correlation processing between the complex signal vectors $x_2(t)$ and $x_3(t)$. Signals indicating the information of the TDOA$\tau_{23(j)}$ and the FDOA$f_{23(j)}$ calculated by the correlation processing unit 302-#2 are output to the geolocation point calculating unit 303-#2.

Further, on the basis of the complex signal vector $x_1(t)$ acquired by the signal receiving unit 301-#1 and the complex signal vector $x_3(t)$ acquired by the signal receiving unit 301-#3, the correlation processing unit 302-#3 calculates information of TDOA$\tau_{13(k)}$ and FDOA$f_{13(k)}$ by correlation processing between the complex signal vectors $x_1(t)$ and $x_3(t)$. Signals indicating the information of the TDOA$\tau_{13(k)}$ and the FDOA$f_{13(k)}$ calculated by the correlation processing unit 302-#3 are output to the geolocation point calculating unit 303-#3.

Next, the geolocation point calculating unit 303 performs geolocation processing using the information of TDOA and FDOA calculated by the correlation processing unit 302 to obtain a geolocation point corresponding to the TDOA and FDOA (step ST103).

A signal indicating the geolocation point calculated by the geolocation point calculating unit 303 is output to the geolocation point accumulating unit 304.

In FIG. 2, the geolocation point calculating unit 303 # 1 performs the geolocation processing using the information of TDOA$\tau_{12(i)}$ and FDOA$f_{12(i)}$ calculated by the correlation processing unit 302-#1 to obtain a geolocation point $p_{12(i)}$ corresponding to the TDOA$_{\tau 12(i)}$ and the FDOA$f_{12(i)}$. Specifically, the geolocation point calculating unit 303-#1 obtains the geolocation point $p_{12(i)}$ by solving simultaneous equations by the following Expressions (1), (2), and (7). A signal indicating the geolocation point $p_{12(i)}$ calculated by the geolocation point calculating unit 303-#1 is output to the geolocation point accumulating unit 304.

Further, the geolocation point calculating unit 303-#2 performs the geolocation processing using the information of TDOA$\tau_{23(j)}$ and FDOA$f_{23(j)}$ calculated by the correlation processing unit 302-#2 to obtain a geolocation point $p_{23(j)}$ corresponding to the TDOA$\tau_{23(j)}$ and the FDOA$f_{23(j)}$. Specifically, the geolocation point calculating unit 303-#1 obtains the geolocation point $p_{23(j)}$ by solving simultaneous equations by the following Expressions (3), (4), and (7). A signal indicating the geolocation point $p_{23(j)}$ calculated by the geolocation point calculating unit 303-#2 is output to the geolocation point accumulating unit 304.

Further, the geolocation point calculating unit 303-#3 performs the geolocation processing using the information of TDOA$\tau_{13(k)}$ and FDOA$f_{13(k)}$ calculated by the correlation processing unit 302-#3 to obtain a geolocation point $p_{13(k)}$ corresponding to the TDOA$\tau_{13(k)}$ and the FDOA$f_{13(k)}$. Specifically, the geolocation point calculating unit 303-#1 obtains the geolocation point $p_{13(k)}$ by solving simultaneous equations by the following Expressions (5), (6), and (7). A signal indicating the geolocation point $p_{13(k)}$ calculated by the geolocation point calculating unit 303-#3 is output to the geolocation point accumulating unit 304.

Note that, in Expressions (1) to (7), c represents the speed of light, $p_{s1}$ represents the position vector of the satellite 1-#1, $p_{s2}$ represents the position vector of the satellite 1-#2, $p_{s3}$ represents the position vector of the satellite 1-#3, $v_{s1}$ represents the velocity vector of the satellite 1-#1, $v_{s2}$ represents the velocity vector of the satellite 1-#2, $v_{s3}$ represents the velocity vector of the satellite 1-#3, and $R_E$ represents the earth radius when the earth is a sphere. Further, $f_0$ represents the center frequency of the reception signal.

$$\tau_{12\ (i)} = \frac{1}{c}\left[\left\{\left|\boldsymbol{p}_{12\ (i)} - \boldsymbol{p}_{s1}\right| - \left|\boldsymbol{p}_{12\ (i)} - \boldsymbol{p}_{s2}\right|\right\}\right] \tag{1}$$

$$f_{12(i)} = \frac{f_0}{c}\left\{\frac{\boldsymbol{v}_{s1}(\boldsymbol{p}_{12(i)} - \boldsymbol{p}_{s1})}{\left|\boldsymbol{p}_{12(i)} - \boldsymbol{p}_{s1}\right|} - \frac{\boldsymbol{v}_{s2}(\boldsymbol{p}_{12(i)} - \boldsymbol{p}_{s2})}{\left|\boldsymbol{p}_{12(i)} - \boldsymbol{p}_{s2}\right|}\right\} \tag{2}$$

$$\tau_{23(j)} = \frac{1}{c}\left[\left\{\left|\boldsymbol{p}_{23(j)} - \boldsymbol{p}_{s2}\right| - \left|\boldsymbol{p}_{23(j)} - \boldsymbol{p}_{s3}\right|\right\}\right] \tag{3}$$

$$f_{23\ (j)} = \frac{f_0}{c}\left\{\frac{\boldsymbol{v}_{s2}\left(\boldsymbol{p}_{23\ (j)} - \boldsymbol{p}_{s2}\right)}{\left|\boldsymbol{p}_{23\ (j)} - \boldsymbol{p}_{s2}\right|} - \frac{\boldsymbol{v}_{s3}\left(\boldsymbol{p}_{23\ (j)} - \boldsymbol{p}_{s3}\right)}{\left|\boldsymbol{p}_{23\ (j)} - \boldsymbol{p}_{s3}\right|}\right\} \tag{4}$$

$$\tau_{13\ (k)} = \frac{1}{c}\left[\left\{\left|\boldsymbol{p}_{13\ (k)} - \boldsymbol{p}_{s1}\right| - \left|\boldsymbol{p}_{13\ (k)} - \boldsymbol{p}_{s3}\right|\right\}\right] \tag{5}$$

$$f_{13\ (k)} = \frac{f_0}{c}\left\{\frac{\boldsymbol{v}_{s1}\left(\boldsymbol{p}_{13\ (k)} - \boldsymbol{p}_{s1}\right)}{\left|\boldsymbol{p}_{13\ (k)} - \boldsymbol{p}_{s1}\right|} - \frac{\boldsymbol{v}_{s3}\left(\boldsymbol{p}_{13\ (k)} - \boldsymbol{p}_{s3}\right)}{\left|\boldsymbol{p}_{13\ (k)} - \boldsymbol{p}_{s3}\right|}\right\} \tag{6}$$

$$\left|\boldsymbol{p}_{12\ (i)}\right| = \left|\boldsymbol{p}_{23\ (j)}\right| = \left|\boldsymbol{p}_{23\ (k)}\right| = R_E \tag{7}$$

Note that, as a method of solving the simultaneous equations, there are a method of obtaining a solution in an iterative operation such as the Newton method or the re-steep descent method and a method of obtaining a solution as a root of a polynomial as described in, for example, Non Patent Literature 3, but the geolocation point calculating unit 303 may use any method.

Non Patent Literature 3: K C. Ho and Y. T. Chan, "Geolocation of a known altitude object from TDOA and FDOA measurements" in IEEE Transactions on Aerospace and Electronic Systems, vol. 33, no. 3, pp. 770-783, July 1997

Next, the geolocation point accumulating unit 304 accumulates information indicating the geolocation point calculated by each geolocation point calculating unit 303 for a certain period of time (step ST104).

That is, when the accumulation time determining unit 305 determines that the elapsed accumulation time has not reached the accumulation time, the geolocation point accumulating unit 304 continues the accumulation. On the other hand, when the accumulation time determining unit 305 determines that the elapsed accumulation time has reached the accumulation time, the geolocation point accumulating unit 304 outputs a signal indicating the accumulated geolocation point to the coordinate converting unit 306.

In FIG. 2, the geolocation point accumulating unit 304 combines the geolocation point calculated by the geolocation point calculating unit 303-#1, the geolocation point calculated by the geolocation point calculating unit 303-#2, and the geolocation point calculated by the geolocation point calculating unit 303-#3 into one, and creates and accumulates a set of geolocation points $p_{all} = [p_{12(i)}, p_{23(j)},$ and $p_{13(k)}]$.

When the accumulation time determining unit 305 determines that the elapsed accumulation time has not reached the accumulation time (when t < T), the geolocation point accumulating unit 304 continues the accumulation of $p_{all}$ and updates the accumulation as $p_{all-T}$. On the other hand, when the accumulation time determining unit 305 determines that the elapsed time t of accumulation has reached the accumulation time T (when t $\geq$ T), the geolocation point accumulating unit 304 outputs a signal indicating the accumulated $p_{all-T}$ to the coordinate converting unit 306.

Next, the coordinate converting unit 306 converts the geolocation point indicated by the information accumulated by the geolocation point accumulating unit 304 for a plurality of hours into latitude and longitude information (step ST105).

A signal indicating the latitude and longitude information obtained by the coordinate converting unit 306 is output to the frequency distribution calculating unit 307.

In FIG. 2, the coordinate converting unit 306 converts the three-dimensional vector information of each of the geolocation points stored in $p_{all-T}$ accumulated for a plurality of hours by the geolocation point accumulating unit 304 into information $p_{all-T-latlon}$ of the latitude $\varphi$ and the longitude $\theta$. A signal indicating the information $p_{all-T-latlon}$ of the latitude $\varphi$ and the longitude $\theta$ obtained by the coordinate converting unit 306 is output to the frequency distribution calculating unit 307.

Next, the frequency distribution calculating unit 307 calculates the frequency distribution of the geolocation points on the basis of the latitude and longitude information obtained by the coordinate converting unit 306 (step ST106).

A signal indicating the frequency distribution calculated by the frequency distribution calculating unit 307 is output to the geolocation point extracting unit 308.

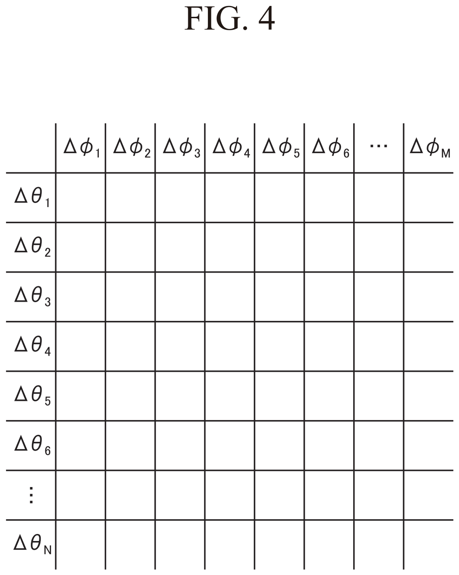

At this time, the frequency distribution calculating unit 307 creates a frequency distribution as illustrated in FIG. 4, for example.

Specifically, in the frequency distribution, the latitude $\varphi$ direction is divided into M grids, the longitude $\theta$ direction is divided into N grids, and for each area (hereinafter referred to as a cell) defined by each grid, the number of geolocation points included in the area is stored.

Next, on the basis of the frequency distribution calculated by the frequency distribution calculating unit 307, the geolocation point extracting unit 308 extracts a geolocation point included in an area having a maximum frequency from the frequency distribution (step ST107). The geolocation point extracted by the geolocation point extracting unit 308 is a candidate for a geolocation point derived from the unknown target radio wave source 10.

A signal indicating the geolocation point extracted by the geolocation point extracting unit 308 is output to the error ellipse calculating unit 309.

In FIG. 2, on the basis of the frequency distribution calculated by the frequency distribution calculating unit 307, the geolocation point extracting unit 308 extracts geolocation points $p_{ext-12}$, $p_{ext-23}$, and $p_{ext-13}$ corresponding to the set of satellites 1-#1 to 1-#3 as geolocation points included in an area having a maximum frequency from the frequency distribution.

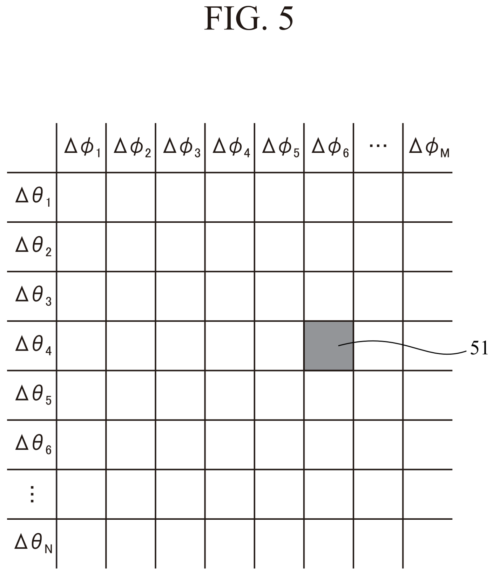

For example, as illustrated in FIG. 5, when an area having a maximum frequency in the frequency distribution calculated by the frequency distribution calculating unit 307 is a cell of $(\Delta\theta_4, \Delta\varphi_6)$ indicated by reference numeral 51, the geolocation point extracting unit 308 extracts geolocation points included in the cell.

Here, the reason why the geolocation point extracting unit 308 extracts the geolocation point included in the area having the maximum frequency will be described.

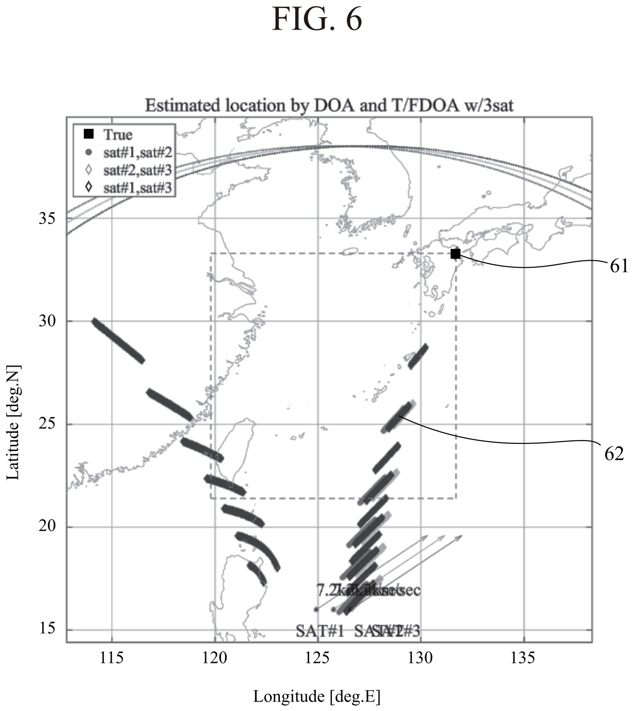

When viewed in a single hour, it is difficult to determine whether a geolocation point calculated from the signal acquired by the radar wave source or the like is derived from the true target radio wave source 10 or an ambiguity. However, for example, as illustrated in FIG. 6, when accumulation results of geolocation points for a plurality of hours are observed, the ambiguity varies in accordance with the movement of the satellite 1, while the true target radio wave source 10 is actually present at the location, and thus the geolocation point appears at the same location regardless of the movement of the satellite 1. Even if the target radio wave source 10 is moving, since the velocity is sufficiently smaller than the velocity of the orbiting satellite 1, when viewed in a plurality of times as a result, the behavior regarding the variation of the position is different depending on whether the geolocation point is derived from the target radio wave source 10 or the ambiguity, and when the geolocation point is derived from the target radio wave source 10, the characteristic is relatively close to a fixed point. Note that, in FIG. 6, a reference numeral 61 indicates a geolocation point derived from the target radio wave source 10, and a reference numeral 62 indicates a geolocation point of the ambiguity.

By using this characteristic, the positioning device 3 according to the first embodiment can extract a geolocation point derived from the target radio wave source 10 without using direction information.

Next, the error ellipse calculating unit 309 obtains, for each set of satellites 1, an error ellipse which is an area where there is a possibility that the geolocation point is present, on the basis of the geolocation point extracted by the geolocation point extracting unit 308 (step ST108).

A signal indicating the error ellipse calculated by the error ellipse calculating unit 309 is output to the common part calculating unit 310.

In FIG. 2, the error ellipse calculating unit 309 obtains an error ellipse which is an area where there is a possibility that the geolocation points $p_{ext-12}$, $p_{ext-23}$, and $p_{ext-13}$ are present for each set of satellites 1-#1 to 1-#3 on the basis of the geolocation points $p_{ext-12}$, $p_{ext-23}$, and $p_{ext-13}$ extracted by the geolocation point extracting unit 308. A signal indicating the error ellipse calculated by the error ellipse calculating unit 309 is output to the common part calculating unit 310.

Specifically, first, the error ellipse calculating unit 309 obtains error covariance matrices $R_{12}$, $R_{23}$, and $R_{13}$ from the respective geolocation points as in the following Expressions (8) to (10).

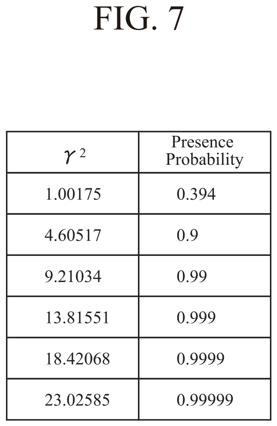

Note that, in Expressions (8) to (10), p(bar)$_{ext-12}$ indicates the barycenter of p$_{ext-12}$, p(bar)$_{ext-23}$ indicates the barycenter of p$_{ext-23}$, and p(bar)$_{ext-13}$ indicates the barycenter of p$_{ext-13}$. Further, $\gamma^2$ is determined from an $\chi^2$ squared distribution of the degree of freedom 2, and the presence probability of the geolocation point changes in accordance with the value as illustrated in FIG. 7.

$$R_{12} = \frac{\gamma^2}{N_{12}} \left(p_{ext-12} - \overline{p}_{ext-12}\right) \left(p_{ext-12} - \overline{p}_{ext-12}\right)^H \tag{8}$$

$$R_{23} = \frac{\gamma^2}{N_{23}} \left(p_{ext-23} - \overline{p}_{ext-23}\right) \left(p_{ext-23} - \overline{p}_{ext-23}\right)^H \tag{9}$$

$$R_{13} = \frac{\gamma^2}{N_{13}} \left(p_{ext-13} - \overline{p}_{ext-13}\right) \left(p_{ext-13} - \overline{p}_{ext-13}\right)^H \tag{10}$$

Next, the error ellipse calculating unit 309 obtains axis lengths $\sigma_{x12}$, $\sigma_{y12}$, $\sigma_{x23}$, $\sigma_{y23}$, $\sigma_{x13}$, and $\sigma_{y13}$ of the ellipse and the inclinations $\varphi_{12}$, $\varphi_{23}$, and $\varphi_{13}$ from the origin from components of each covariance matrix as in the following Expressions (11) to (19).

$$\sigma_{x12} = \frac{R_{12}(1,\ 1) + R_{12}(2,\ 2)}{2} + \frac{R_{12}(1,\ 2)}{\sin 2\phi_{12}} \tag{11}$$

$$\sigma_{y12} = \frac{R_{12}(1,\ 1) + R_{12}(2,\ 2)}{2} - \frac{R_{12}(1,\ 2)}{\sin 2\phi_{12}} \tag{12}$$

$$\phi_{12} = \frac{1}{2} \tan^{-1} \left( \frac{2R_{12}(1,\ 2)}{R_{12}(1,\ 1) - R_{12}(2,\ 2)} \right) \tag{13}$$

$$\sigma_{x23} = \frac{R_{23}(1,\ 1) + R_{23}(2,\ 2)}{2} + \frac{R_{23}(1,\ 2)}{\sin 2\phi_{23}} \tag{14}$$

$$\sigma_{y23} = \frac{R_{23}(1,\ 1) + R_{23}(2,\ 2)}{2} - \frac{R_{23}(1,\ 2)}{\sin 2\phi_{23}} \tag{15}$$

$$\phi_{23} = \frac{1}{2} \tan^{-1} \left( \frac{2R_{23}(1,\ 2)}{R_{23}(1,\ 1) - R_{23}(2,\ 2)} \right) \tag{16}$$

$$\sigma_{x13} = \frac{R_{13}(1,\ 1) + R_{13}(2,\ 2)}{2} + \frac{R_{13}(1,\ 2)}{\sin 2\phi_{13}} \tag{17}$$

$$\sigma_{y13} = \frac{R_{13}(1,\ 1) + R_{13}(2,\ 2)}{2} - \frac{R_{13}(1,\ 2)}{\sin 2\phi_{13}} \tag{18}$$

$$\phi_{13} = \frac{1}{2}\tan^{-1}\left(\frac{2R_{13}(1,\ 2)}{R_{13}(1,\ 1) - R_{13}(2,\ 2)}\right) \tag{19}$$

Next, as in the following Expressions (20) to (28), the error ellipse calculating unit 309 calculates three constants for determining an equation of an ellipse for each ellipse using the calculated axis lengths $\varphi_{x12}$, $\sigma_{y12}$, $\sigma_{x23}$, $\sigma_{y23}$, $\sigma_{x13}$, and $\sigma_{y13}$ of the ellipse and the inclinations $\varphi_{12}$, $\varphi_{23}$, and $\varphi_{13}$ from the origin.

Note that, in Expressions (20) to (28), $A_{12}$, $B_{12}$, and $C_{12}$ represent variables that determine an equation of an error ellipse indicating an area where there is a possibility that $p_{ext-12}$ is present, $A_{23}$, $B_{23}$, and $C_{23}$ represent variables that determine an equation of an error ellipse indicating an area where there is a possibility that $p_{ext-23}$ is present, and $A_{13}$, $B_{13}$, and $C_{13}$ represent variables that determine an equation of an error ellipse indicating an area where there is a possibility that $p_{ext-13}$ is present.

$$A_{12} = \left(\frac{\cos\phi_{12}}{\sigma_{x12}}\right)^2 + \left(\frac{\sin\phi_{12}}{\sigma_{y12}}\right)^2 \tag{20}$$

$$B_{12} = -\cos\phi_{12}\sin\phi_{12}\left(-\frac{1}{\sigma_{x12}^2} + \frac{1}{\sigma_{y12}^2}\right) \tag{21}$$

$$C_{12} = \left(\frac{\sin\phi_{12}}{\sigma_{x12}}\right)^2 + \left(\frac{\cos\phi_{12}}{\sigma_{y12}}\right)^2 \tag{22}$$

$$A_{23} = \left(\frac{\cos\phi_{23}}{\sigma_{x23}}\right)^2 + \left(\frac{\sin\phi_{23}}{\sigma_{y23}}\right)^2 \tag{23}$$

$$B_{23} = -\cos\phi_{23}\sin\phi_{23}\left(-\frac{1}{\sigma_{x23}^2} + \frac{1}{\sigma_{y23}^2}\right) \tag{24}$$

$$C_{23} = \left(\frac{\sin\phi_{23}}{\sigma_{x23}}\right)^2 + \left(\frac{\cos\phi_{23}}{\sigma_{y23}}\right)^2 \tag{25}$$

$$A_{13} = \left(\frac{\cos\phi_{13}}{\sigma_{x13}}\right)^2 + \left(\frac{\sin\phi_{13}}{\sigma_{y13}}\right)^2 \tag{26}$$

$$B_{13} = -\cos\phi_{13}\sin\phi_{13}\left(-\frac{1}{\sigma_{x13}^2} + \frac{1}{\sigma_{y13}^2}\right) \tag{27}$$

$$C_{13} = \left(\frac{\sin\phi_{13}}{\sigma_{x13}}\right)^2 + \left(\frac{\cos\phi_{13}}{\sigma_{y13}}\right)^2 \tag{28}$$

By calculating the constant of each ellipse, the equation of the ellipse in the latitude-longitude direction can be expressed as the following Expressions (29) to (31).

Note that, in the expressions (29) to (31), $\theta(bar)_{12}$ indicates coordinates in the longitude direction of $p(bar)_{ext-12}$, $\theta(bar)_{23}$ indicates coordinates in the longitude direction of $p(bar)_{ext-23}$, $\theta(bar)_{13}$ indicates coordinates in the longitude direction of $p(bar)_{ext-13}$, $\varphi(bar)_{12}$ indicates coordinates in the latitude direction of $p(bar)_{ext-12}$, $\varphi(bar)_{23}$ indicates coordinates in the latitude direction of $p(bar)_{ext-23}$, and $\varphi(bar)_{13}$ indicates coordinates in the latitude direction of $p(bar)_{ext-13}$.

$$A_{12}(\theta - \bar{\theta}_{12})^2 + 2B_{12}(\theta - \bar{\theta}_{12})(\varphi - \bar{\varphi}_{12}) + C_{12}(\varphi - \bar{\varphi}_{12})^2 = 1 \qquad (29)$$

$$A_{23}(\theta - \bar{\theta}_{23})^2 + 2B_{23}(\theta - \bar{\theta}_{23})(\varphi - \bar{\varphi}_{23}) + C_{23}(\varphi - \bar{\varphi}_{23})^2 = 1 \qquad (30)$$

$$A_{13}(\theta - \bar{\theta}_{13})^2 + 2B_{13}(\theta - \bar{\theta}_{13})(\varphi - \bar{\varphi}_{13}) + C_{13}(\varphi - \bar{\varphi}_{13})^2 = 1 \qquad (31)$$

Next, the error ellipse calculating unit 309 outputs, to the common part calculating unit 310, the calculated information of the equation of the ellipse represented by Expressions (29), (30), and (31) and signals indicating the geolocation points $p_{ext-12}$, $p_{ext-23}$, and $p_{ext-13}$ extracted by the geolocation point extracting unit 308.

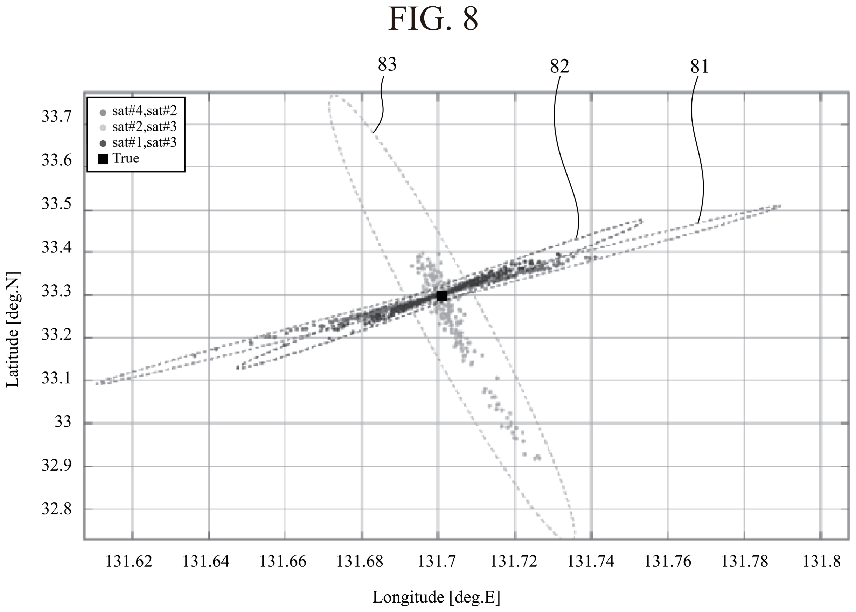

Further, an operation example of the error ellipse calculating unit 309 at this time is illustrated in FIG. 8. In FIG. 8, reference numeral 81 to 83 denotes an error ellipse calculated by the error ellipse calculating unit 309.

Next, on the basis of the error ellipses calculated by the error ellipse calculating unit 309, the common part calculating unit 310 extracts a geolocation point that is present in an overlapping area that is a common part of relevant error ellipses (step ST109).

A signal indicating the geolocation point extracted by the common part calculating unit 310 is output to the barycenter calculating unit 311.

In FIG. 2, the common part calculating unit 310 extracts, from $p_{ext-12}$, $p_{ext-23}$, and $p_{ext-13}$, only geolocation points that satisfy the conditions of the following Expressions (32) to (34). A signal indicating a geolocation point $p_{ext-12-23-13}$ extracted by the common part calculating unit 310 is output to the barycenter calculating unit 311.

$$A_{12}(\theta - \bar{\theta}_{12})^2 + 2B_{12}(\theta - \bar{\theta}_{12})(\varphi - \bar{\varphi}_{12}) + C_{12}(\varphi - \bar{\varphi}_{12})^2 < 1 \qquad (32)$$

$$A_{23}(\theta - \bar{\theta}_{23})^2 + 2B_{23}(\theta - \bar{\theta}_{23})(\varphi - \bar{\varphi}_{23}) + C_{23}(\varphi - \bar{\varphi}_{23})^2 < 1 \qquad (33)$$

$$A_{13}(\theta - \bar{\theta}_{13})^2 + 2B_{13}(\theta - \bar{\theta}_{13})(\varphi - \bar{\varphi}_{13}) + C_{13}(\varphi - \bar{\varphi}_{13})^2 < 1 \qquad (34)$$

The spread of the error ellipse is generally determined by the signal-to-noise ratio (SNR) of a reception signal and the physical positional relationship between the satellite 1 and the target radio wave source 10. Therefore, depending on conditions, an error of a specific ellipse among the plurality of ellipses may be relatively large. In this case, in evaluation of only $p_{all-T-latlon}$ extracted by evaluation of only the frequency distribution, a geolocating error may increase as a result due to the influence of the geolocation point according to the error ellipse having a relatively large error.

The processing in the common part calculating unit 310 extracts only geolocation points present in relevant common part of the error ellipses, thereby reducing the influence even when a large error occurs in the geolocation points calculated by the specific satellite 1, and enabling robust geolocation regardless of conditions.

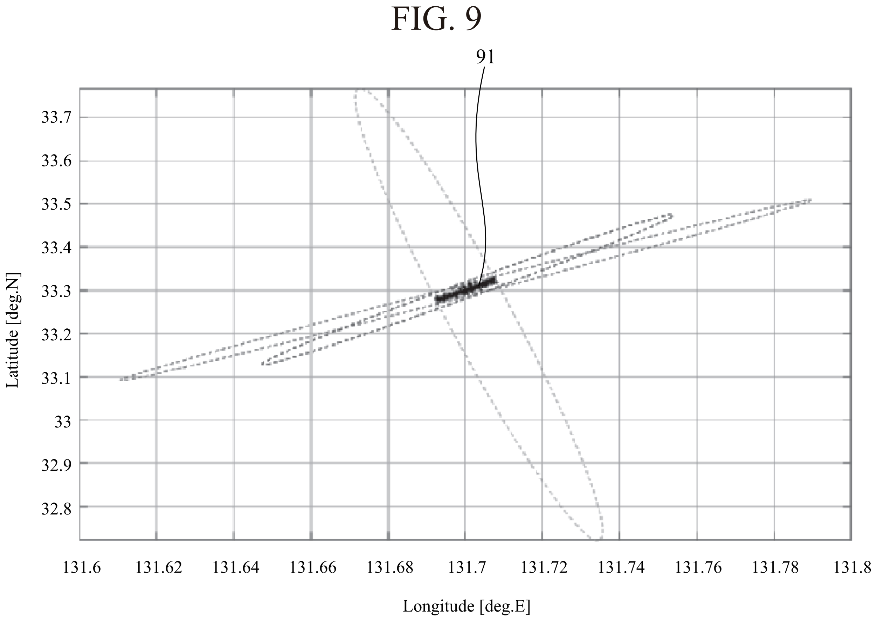

Further, an operation example of the common part calculating unit 310 is illustrated in FIG. 9. In FIG. 9, a reference numeral 91 indicates a geolocation point extracted by the common part calculating unit 310.

Next, the barycenter calculating unit 311 sets a barycenter of the geolocation point as the position of the target radio wave source 10 on the basis of the geolocation point extracted by the common part calculating unit 310 (step ST110).

A signal indicating the position of the target radio wave source 10 estimated by the barycenter calculating unit 311 is output to the outside.

In FIG. 2, the barycenter calculating unit 311 sets the barycenter of the geolocation point $p_{ext-12-23-13}$ present in the common part of the error ellipses extracted by the common part calculating unit 310 as a position $p_{ext}$ of the target radio wave source 10. When the number of $p_{ext-12-23-13}$ is $N_{ext-12-23-13}$, $p_{ext}$ can be expressed as the following Expression (35).

$$\boldsymbol{p}_{est} = \frac{\sum \boldsymbol{p}_{ext-12-23-13}}{N_{ext-12-23-13}} \qquad (35)$$

As described above, in the positioning device 3 according to the first embodiment, when the geolocation point is temporally accumulated, a characteristic that the geolocation point derived from the target radio wave source 10 exhibits a characteristic relatively close to a fixed point is used when the geolocation point derived from target radio wave source 10 is compared with the ambiguity. Then, the positioning device 3 according to the first embodiment extracts a geolocation point included in an area having the maximum frequency from a frequency distribution of geolocation points acquired in a plurality of times, and estimates the position of the target radio wave source 10 using the geolocation point. Thus, the positioning device 3 according to the first embodiment can estimate the position of the target radio wave source 10 robustly without using direction information and regardless of the positional relationship of the satellite 1.

As described above, according to the first embodiment, the positioning device 3 includes: the plurality of signal receiving units 301 provided one by one for the plurality of satellites 1 to acquire complex signal vectors of signals received by the satellites 1; the correlation processing unit 302 to calculate information of TDOA and FDOA by correlation processing between the complex signal vectors on the basis of the complex signal vectors acquired by the signal receiving unit 301; the geolocation point calculating unit 303 to calculate a geolocation point corresponding to the TDOA and the FDOA on the basis of the information of the TDOA and the FDOA calculated by the correlation processing unit 302; the coordinate converting unit 306 to convert the geolocation point into information of latitude and longitude on the basis of geolocation points for a plurality of times calculated by the geolocation point calculating unit 303; the frequency distribution calculating unit 307 to calculate a frequency distribution of the geolocation point on the basis of the information of latitude and longitude obtained by the coordinate converting unit 306; the geolocation point extracting unit 308 to extract a geolocation point included in an area having a maximum frequency from the frequency distribution on the basis of the frequency distribution calculated by the frequency distribution calculating unit 307; and the position estimating unit to estimate a position of the target radio wave source 10 on the basis of the geolocation point extracted by the geolocation point extracting unit 308. Thus, the positioning device 3 according to the first embodiment can perform positioning of the target radio wave source 10 regardless of the type of the unknown target radio wave source 10 without using the direction information. As a result, in the positioning device 3 according to the first embodiment, it is possible to avoid an increase in hardware scale and cost due to mounting of an array antenna for acquiring direction information as in the related art.

Second Embodiment

In the positioning device 3 according to the first embodiment, it is assumed that there is a single target radio wave source 10. On the other hand, in a positioning device 3 according to a second embodiment, a case where a plurality of target radio wave sources 10 is present will be described.

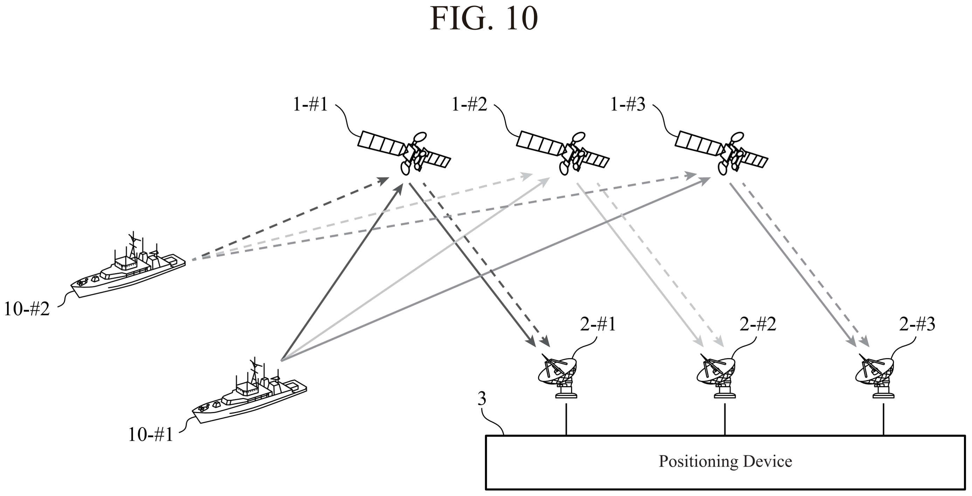

FIG. 10 is a block diagram illustrating a schematic configuration example of a positioning system including the positioning device 3 according to the second embodiment.

In the positioning system according to the first embodiment illustrated in FIG. 1, the number of the target radio wave sources 10 as a positioning target is singular, whereas in the positioning system according to the second embodiment illustrated in FIG. 10, the number of the target radio wave sources 10 as a positioning target is plural.

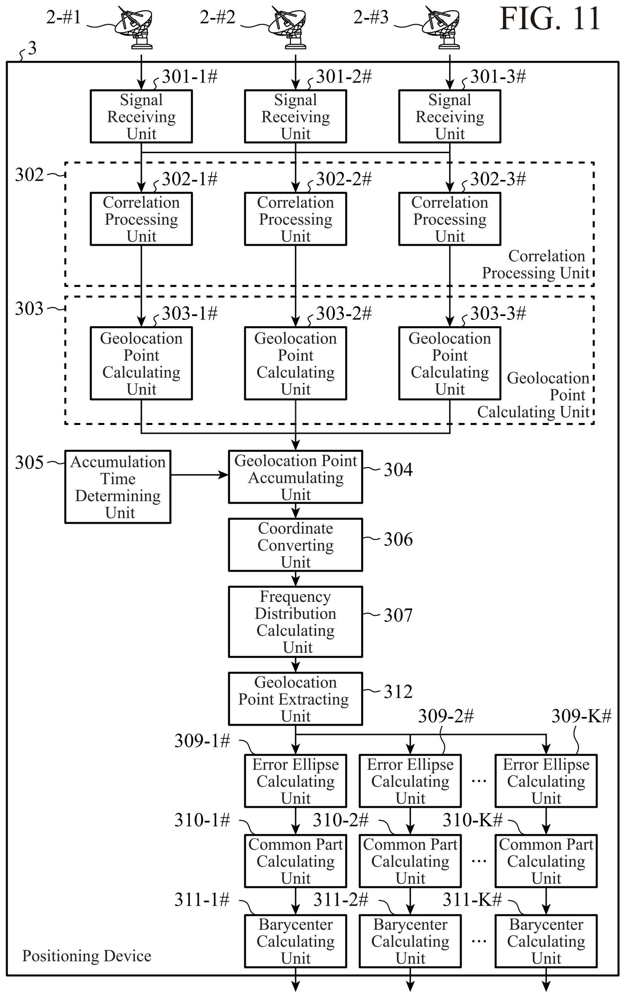

Further, FIG. 11 is a block diagram illustrating a schematic configuration example of the positioning device 3 according to the second embodiment.

In the positioning device 3 according to the second embodiment illustrated in FIG. 11, the positioning device 3 according to the first embodiment illustrated in FIG. 2 is different from the positioning device 3 illustrated in FIG. 2 in that the geolocation point extracting unit 308 is changed to a geolocation point extracting unit 312, and each of an error ellipse calculating unit 309, a common part calculating unit 310, and a barycenter calculating unit 311 is changed from a single unit to a plurality of units.

On the basis of a frequency distribution calculated by the frequency distribution calculating unit 307, the geolocation point extracting unit 312 calculates the number of areas where a frequency is equal to or more than a threshold from the frequency distribution, and extracts a geolocation point included in the areas. Thus, the geolocation point extracting unit 312 calculates the number of the target radio wave sources 10 and extracts a candidate for a geolocation point derived from the target radio wave source 10.

A signal indicating the geolocation point extracted by the geolocation point extracting unit 312 is output to the error ellipse calculating unit 309. Further, a signal indicating the number calculated by the geolocation point extracting unit 312 is output to the error ellipse calculating unit 309, the common part calculating unit 310, and the barycenter calculating unit 311.

Further, each error ellipse calculating unit 309 operates in parallel by the number calculated by the geolocation point extracting unit 312, and calculates, for each set of satellites 1, an error ellipse, which is an area where there is a possibility that a geolocation point is present, on the basis of the geolocation point extracted by the geolocation point extracting unit 312.

The error ellipse calculation operation itself by the error ellipse calculating unit 309 is similar to the error ellipse calculation operation by the error ellipse calculating unit 309 in the first embodiment.

Further, each common part calculating unit 310 operates in parallel by the number calculated by the geolocation point extracting unit 312, and extracts a plurality of geolocation points present in the common part of the error ellipses on the basis of the error ellipses calculated by the error ellipse calculating unit 309.

The error ellipse calculation operation itself by the error ellipse calculating unit 309 is similar to the error ellipse calculation operation by the error ellipse calculating unit 309 in the first embodiment.

Further, each barycenter calculating unit 311 operates in parallel by the number calculated by the geolocation point extracting unit 312, and calculates the barycenter of the geolocation point as a target geolocation point on the basis of the geolocation points extracted by the common part calculating unit 310.

The error ellipse calculation operation itself by the error ellipse calculating unit 309 is similar to the error ellipse calculation operation by the error ellipse calculating unit 309 in the first embodiment.

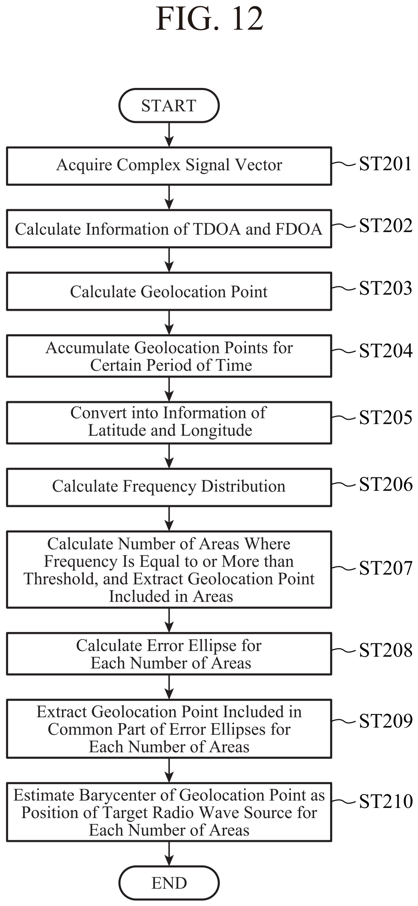

Next, an operation example of the positioning device 3 according to the second embodiment illustrated in FIG. 11 will be described with reference to FIG. 12.

The processing of steps ST201 to ST206 in the positioning device 3 according to the second embodiment illustrated in FIG. 12 is similar to the processing of steps ST101 to ST106 in the positioning device 3 according to the first embodiment illustrated in FIG. 3.

On the basis of the frequency distribution calculated by the frequency distribution calculating unit 307, the geolocation point extracting unit 312 calculates the number of areas where a frequency is equal to or more than the threshold from the frequency distribution, and extracts a geolocation point included in the areas (step ST207). Thus, the geolocation point extracting unit 312 estimates the number of the target radio wave sources 10 and extracts a candidate for a geolocation point derived from the target radio wave source 10.

A signal indicating the geolocation point extracted by the geolocation point extracting unit 312 is output to the error ellipse calculating unit 309. Further, a signal indicating the number calculated by the geolocation point extracting unit 312 is output to the error ellipse calculating unit 309, the common part calculating unit 310, and the barycenter calculating unit 311.

Here, the area number in the longitude direction is k, and the area number in the latitude direction is l. In this case, for the frequency distribution calculated by the frequency distribution calculating unit 307, the geolocation point extracting unit 312 calculates the number of latitude and longitude areas $N_{tar}$ of the frequency distribution satisfying the following Expression (36), and extracts a geolocation point included in the areas.

$$hist\big(k、\ l\big) > T_{count} \tag{36}$$

Then, the positioning device 3 performs the processing of step ST208 by the error ellipse calculating unit 309, the processing of step ST209 by the common part calculating unit 310, and the processing of step ST210 by the barycenter calculating unit 311 in parallel for a set of (k, l) extracted by the geolocation point extracting unit 312, that is, geolocation points extracted by (k, 1) = ($k_1$, $l_1$), ($k_2$, $l_2$), ..., ($k_{Ntar}$, $l_{Ntar}$), and simultaneously outputs a signal indicating the estimation result for $N_{tar}$.

As described above, in the positioning device 3 according to the second embodiment, the geolocation point extracting unit 312 is provided at a subsequent stage of the frequency distribution calculating unit 307 in the first embodiment. Thus, in the positioning device 3 according to the second embodiment, it is possible to cope with a case where there is a plurality of the target radio wave sources 10, and it is possible to simultaneously output signals indicating the positions of the target radio wave sources 10.

As described above, according to the second embodiment, the positioning device 3 includes: the plurality of signal receiving units 301 provided one by one for the plurality of satellites 1 to acquire complex signal vectors of signals received by the satellites 1; the correlation processing unit 302 to calculate information of TDOA and FDOA by correlation processing between the complex signal vectors on the basis of the complex signal vectors acquired by the signal receiving unit 301; the geolocation point calculating unit 303 to calculate a geolocation point corresponding to the TDOA and the FDOA on the basis of the information of the TDOA and the FDOA calculated by the correlation processing unit 302; the coordinate converting unit 306 to convert the geolocation point into information of latitude and longitude on the basis of geolocation points for a plurality of times calculated by the geolocation point calculating unit 303; the frequency distribution calculating unit 307 to calculate a frequency distribution of the geolocation point on the basis of the information of latitude and longitude obtained by the coordinate converting unit 306; the geolocation point extracting unit 312 to calculate the number of areas where a frequency is equal to or more than a threshold from the frequency distribution on the basis of the frequency distribution calculated by the frequency distribution calculating unit 307, and extract a geolocation point included in the areas; and the position estimating unit to estimate a position of the target radio wave source 10 on the basis of the geolocation point extracted by the geolocation point extracting unit 312. Thus, in addition to the effects of the first embodiment, the positioning device 3 according to the second embodiment can perform positioning of each target radio wave source 10 even when there is a plurality of the target radio wave sources 10.

Third Embodiment

A positioning device 3 according to a third embodiment is configured to be able to reduce the influence of a time error, a frequency error, and the like occurring in the satellite 1 by simultaneously receiving a signal from a reference station 11 whose position is known in addition to the signal from the target radio wave source 10.

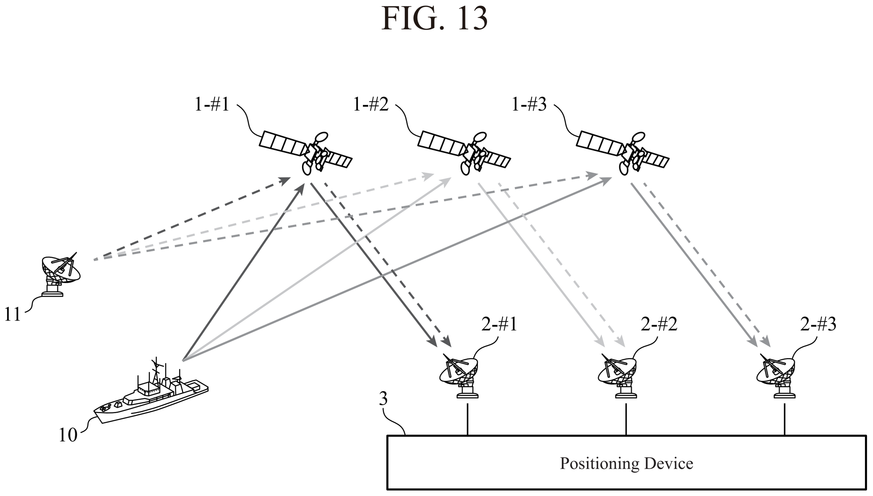

FIG. 13 is a block diagram illustrating a schematic configuration example of a positioning system including the positioning device 3 according to the third embodiment.

While the positioning system according to the first embodiment illustrated in FIG. 1 receives only a signal from the target radio wave source 10 as a positioning target, the positioning system according to the third embodiment illustrated in FIG. 13 also receives a signal from a reference station 11 whose position is known in addition to the signal from the target radio wave source 10 as a positioning target.

That is, the satellite 1 in the third embodiment receives a signal from the target radio wave source 10 and a signal from the reference station 11.

The signals received by the satellite 1 are transmitted to the ground station antenna 2.

In FIG. 13, the satellite 1-#1 receives the signal from the target radio wave source 10 and the signal from the reference station 11. The signals received by the satellite 1-#1 are transmitted to the ground station antenna 2-#1.

Further, the satellite 1-#2 receives the signal from the target radio wave source 10 and the signal from the reference station 11. The signals received by the satellite 1-#2 are transmitted to the ground station antenna 2-#2.

Further, the satellite 1-#3 receives the signal from the target radio wave source 10 and the signal from the reference station 11. The signals received by the satellite 1-#3 are transmitted to the ground station antenna 2-#3.

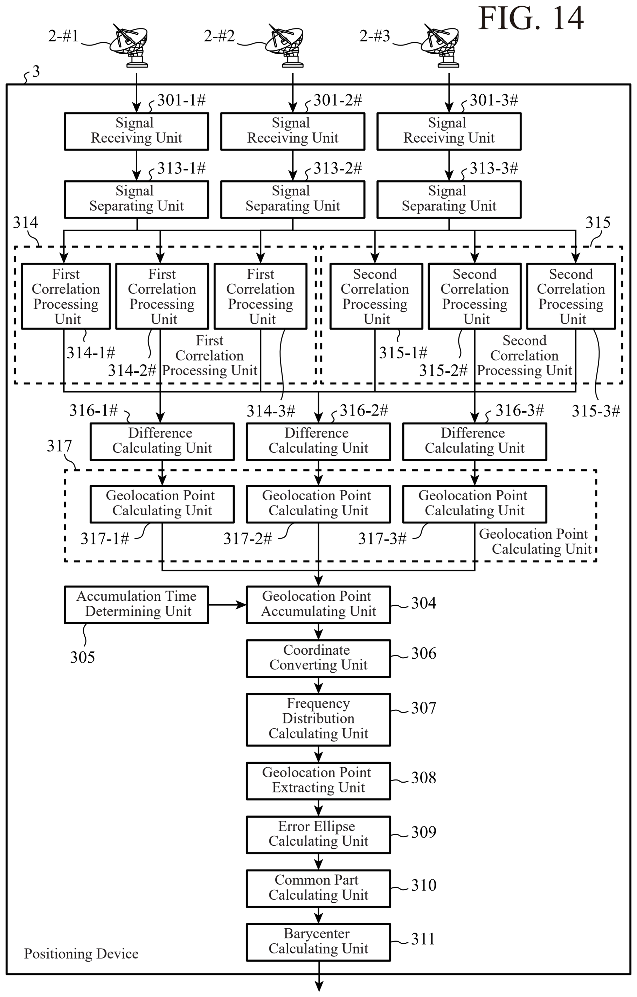

Further, FIG. 14 is a block diagram illustrating a schematic configuration example of the positioning device 3 according to the third embodiment.

In the positioning device 3 according to the third embodiment illustrated in FIG. 14, a plurality of signal separating units 313 and a plurality of difference calculating units 316 are added to the positioning device 3 according to the first embodiment illustrated in FIG. 2, the correlation processing unit 302 is changed to a first correlation processing unit 314 and a second correlation processing unit 315, and the geolocation point calculating unit 303 is changed to a geolocation point calculating unit 317.

Note that the signal separating units 313 are provided in a number corresponding to the number of satellites 1. FIG. 14 illustrates a case where three signal separating units 313-#1 to 313-#3 are provided as the signal separating unit 313.

Further, the difference calculating units 316 are provided in a number corresponding to the set of satellites 1. FIG. 14 illustrates a case where three difference calculating units 316-#1 to 316-#3 are provided as the difference calculating unit 316.

Further, in FIG. 14, the first correlation processing unit 314 includes first correlation processing units 314-#1 to 314-#3 corresponding to the set of satellites 1. Further, in FIG. 14, the second correlation processing unit 315 includes second correlation processing units 315-#1 to 315-#3 corresponding to the set of satellites 1. Furthermore, in FIG. 14, the geolocation point calculating unit 317 includes geolocation point calculating units 317-#-#1 to 317-#3 corresponding to the set of satellites 1.

On the basis of a complex signal vector acquired by the corresponding signal receiving unit 301, the signal separating unit 313 separates a target signal and the signal from the reference station 11 from the complex signal vector.

The target signal obtained by the signal separating unit 313 is output to the first correlation processing unit 314. Further, the signal from the reference station 11 obtained by the signal separating unit 313 is output to the second correlation processing unit 315.

In FIG. 14, on the basis of a complex signal vector $x_{1(t)}$ acquired by the signal receiving unit 301-#1, the signal separating unit 313-#1 separates a target signal $x_{tar1(t)}$ and a signal $x_{ref1(t)}$ from the reference station 11 by using filter processing or the like in the frequency domain from the complex signal vector $x_{1(t)}$. The target signal $x_{tar1(t)}$ obtained by the signal separating unit 313-#1 is output to the first correlation processing unit 314-#1 and the first correlation processing unit 314-#3. Further, the signal $x_{ref1(t)}$ from the reference station 11 obtained by the signal separating unit 313-#1 is output to the second correlation processing unit 315-#1 and the second correlation processing unit 315-#3.

Furthermore, on the basis of a complex signal vector $x_2(t)$ acquired by the signal receiving unit 301-#2, the signal separating unit 313-#2 separates a target signal $x_{tar2(t)}$ and a signal $x_{ref2(t)}$ from the reference station 11 from the complex signal vector $x_2(t)$ by using filter processing or the like in the frequency domain. The target signal $x_{tar2(t)}$ obtained by the signal separating unit 313-#2 is output to the first correlation processing unit 314-#1 and the first correlation processing unit 314-#2. Further, the signal $x_{ref2(t)}$ from the reference station 11 obtained by the signal separating unit 313-#2 is output to the second correlation processing unit 315-#1 and the second correlation processing unit 315-#2.

Furthermore, on the basis of a complex signal vector $x_{3(t)}$ acquired by the signal receiving unit 301-#3, the signal separating unit 313-#3 separates a target signal $x_{tar3(t)}$ and a signal $x_{ref3(t)}$ from the reference station 11 from the complex signal vector $x_{3(t)}$ by using filter processing or the like in the frequency domain. The target signal $x_{tar3(t)}$ obtained by the signal separating unit 313-#3 is output to the first correlation processing unit 314-#2 and the first correlation processing unit 314-#3. Further, the signal $x_{ref3(t)}$ from the reference station 11 obtained by the signal separating unit 313-#3 is output to the second correlation processing unit 315-#2 and the second correlation processing unit 315-#3.

On the basis of target signals obtained by the respective signal separating units 313, the first correlation processing unit 314 calculates information of TDOA and FDOA by correlation processing between the target signals.

Specifically, the first correlation processing unit 314 calculates information of TDOA and FDOA by extracting a peak value of CAF according to the method described in Non Patent Literature 1 as correlation processing between the target signals. Note that, when the target radio wave source 10 is a radar wave source, there is a plurality of peak values of CAF, and as a result, information of a plurality of TDOAs and FDOAs is calculated.

A signal indicating information of the TDOA and the FDOA calculated by the first correlation processing unit 314 is output to the difference calculating unit 316.

In FIG. 14, on the basis of the target signal $x_{tar1(t)}$ obtained by the signal separating unit 313-#1 and the target signal $x_{tar2(t)}$ obtained by the signal separating unit 313-#2, the first correlation processing unit 314-#1 calculates information of TDOA $\tau_{12(i)}$ and FDOA $f_{12(i)}$ by correlation processing between the target signals $x_{tar1(t)}$ and $x_{tar2(t)}$. Signals indicating the information of the TDOA $\tau_{12(i)}$ and the FDOA $f_{12(i)}$ calculated by the first correlation processing unit 314-#1 are output to the difference calculating unit 316-#1.

Further, on the basis of the target signal $x_{tar2(t)}$ obtained by the signal separating unit 313-#2 and the target signal $x_{tar3(t)}$ obtained by the signal separating unit 313-#3, the first correlation processing unit 314-#2 calculates information of TDOA $\tau_{23(j)}$ and FDOA $f_{23(j)}$ by correlation processing between the target signals $x_{tar2(t)}$ and $X_{tar3(t)}$. Signals indicating the information of the TDOA $\tau_{23(j)}$ and the FDOA $f_{23(j)}$ calculated by the first correlation processing unit 314-#2 are output to the difference calculating unit 316-#2.

Further, on the basis of the target signal $x_{tar1(t)}$ obtained by the signal separating unit 313-#1 and the target signal $x_{tar3(t)}$ obtained by the signal separating unit 313-#3, the first correlation processing unit 314-#3 calculates information of TDOA $\tau_{13(k)}$ and FDOA $f_{13(k)}$ by correlation processing between the target signals $x_{tar1(t)}$ and $X_{tar3(t)}$. Signals indicating the information of the TDOA $\tau_{13(k)}$ and the FDOA $f_{13(k)}$ calculated by the first correlation processing unit 314-#3 are output to the difference calculating unit 316-#3.

On the basis of signals from the reference station 11 obtained by the respective signal separating units 313, the second correlation processing unit 315 calculates information of TDOA and FDOA by correlation processing between the signals.

Specifically, the second correlation processing unit 315 calculates information of TDOA and FDOA by extracting a peak value of CAF in accordance with the method described in Non Patent Literature 1 as correlation processing between the signals. Note that, here, in a case where the reference station 11 is a radar wave source, there is a plurality of peaks in CAF, but since the position is known, TDOA and FDOA derived from the reference station 11 can be extracted.

Signals indicating the information of the TDOA and the FDOA calculated by the second correlation processing unit 315 is output to the difference calculating unit 316.

In FIG. 14, on the basis of the signal $x_{ref1(t)}$ from the reference station 11 obtained by the signal separating unit 313-#1 and the signal $x_{ref2(t)}$ from the reference station 11 obtained by the signal separating unit 313-#2, the second correlation processing unit 315-#1 calculates information of TDOA $\tau_{12r}$ and FDOA $f_{12r}$ by correlation processing between the signals $x_{ref1(t)}$ and $x_{ref2(t)}$. Signals indicating the information of the TDOA $\tau_{12r}$ and the FDOA $f_{12r}$ calculated by the second correlation processing unit 315-#1 are output to the difference calculating unit 316-#1.

Further, on the basis of the signal $x_{ref2(t)}$ from the reference station 11 obtained by the signal separating unit 313-#2 and the signal $x_{ref3(t)}$ from the reference station 11 obtained by the signal separating unit 313-#3, the second correlation processing unit 315-#2 calculates information of TDOA $\tau_{23r}$ and FDOA $f_{23r}$ by correlation processing between the signals $x_{ref2(t)}$ and $x_{ref3(t)}$. Signals indicating the information of the TDOA $\tau_{23r}$ and the FDOA $f_{23r}$ calculated by the second correlation processing unit 315-#2 are output to the difference calculating unit 316-#2.

Further, on the basis of the signal $x_{ref1(t)}$ from the reference station 11 obtained by the signal separating unit 313-#1 and the signal $x_{ref3(t)}$ from the reference station 11 obtained by the signal separating unit 313-#3, the second correlation processing unit 315-#3 calculates information of TDOA $\tau_{13r}$ and FDOA $f_{13r}$ by correlation processing between the signals $x_{ref1(t)}$ and $x_{ref3(t)}$. Signals indicating the information of the TDOA $\tau_{13r}$ and the FDOA $f_{13r}$ calculated by the second correlation processing unit 315-#3 are output to the difference calculating unit 316-#3.

The difference calculating unit 316 calculates the difference between the TDOAs and the difference between the FDOAs on the basis of the information of the TDOAs and the FDOAs calculated by the first correlation processing unit 314 and the information of the TDOAs and the FDOAs calculated by the second correlation processing unit 315.

A signal indicating the difference calculated by the difference calculating unit 316 is output to the corresponding geolocation point calculating unit 317.

In FIG. 14, the difference calculating unit 316-#1 calculates a difference $\tau_{12-r(i)}$ between the TDOA $_{12(i)}$ calculated by the first correlation processing unit 314-#1 and the TDOA $\tau_{12r}$ calculated by the second correlation processing unit 315-#1, and a difference $f_{12-r(i)}$ between the FDOA $_{12(i)}$ calculated by the first correlation processing unit 314-#1 and the FDOA $f_{12r}$ calculated by the second correlation processing unit 315-#1. Signals indicating the differences $\tau_{12-r(i)}$ and $f_{12-r(i)}$ calculated by the difference calculating unit 316-#1 are output to the geolocation point calculating unit 317-#1.

Further, the difference calculating unit 316-#2 calculates a difference $\tau_{23-r(j)}$ between the TDOA $_{23(j)}$ calculated by the first correlation processing unit 314-#2 and the TDOA $\tau_{23r}$ calculated by the second correlation processing unit 315-#2, and a difference $f_{23-r(j)}$ between the FDOA $_{23(j)}$ calculated by the first correlation processing unit 314-#2 and the FDOA $f_{23r}$

calculated by the second correlation processing unit 315-#2. Signals indicating the differences $\tau_{23\text{-}r(i)}$ and $f_{23\text{-}r(i)}$ calculated by the difference calculating unit 316-#2 are output to the geolocation point calculating unit 317-#2.

Further, the difference calculating unit 316-#3 calculates a difference $\tau_{13\text{-}r(k)}$ between the $TDOA_{13(k)}$ calculated by the first correlation processing unit 314-#3 and the $TDOA\tau_{13r}$ calculated by the second correlation processing unit 315-#3, and a difference $f_{13\text{-}r(k)}$ between the $FDOA_{13(k)}$ calculated by the first correlation processing unit 314-#3 and the $FDOAf_{13r}$ calculated by the second correlation processing unit 315-#3. Signals indicating the differences $\tau_{13\text{-}r(i)}$ and $f_{13\text{-}r(i)}$ calculated by the difference calculating unit 316-#3 are output to the geolocation point calculating unit 317-#3.

The geolocation point calculating unit 317 performs geolocation processing using the difference calculated by the difference calculating unit 316 to obtain a geolocation point corresponding to the difference.

A signal indicating the geolocation point calculated by the geolocation point calculating unit 317 is output to the geolocation point accumulating unit 304.

In FIG. 14, the geolocation point calculating unit 317-#1 performs the geolocation processing using the differences $\tau_{12\text{-}r(i)}$ and $f_{12\text{-}r(i)}$ calculated by the difference calculating unit 316-#1 to obtain a geolocation point $p_{12(i)}$ corresponding to the difference. A signal indicating the geolocation point $p_{12(i)}$ calculated by the geolocation point calculating unit 317-#1 is output to the geolocation point accumulating unit 304.

Further, the geolocation point calculating unit 317-#2 performs the geolocation processing using the differences $\tau_{23\text{-}r(j)}$ and $f_{23\text{-}r(j)}$ calculated by the difference calculating unit 316-#2 to obtain a geolocation point $p_{23(j)}$ corresponding to the difference. A signal indicating the geolocation point $p_{23(j)}$ calculated by the geolocation point calculating unit 317-#2 is output to the geolocation point accumulating unit 304.

Further, the geolocation point calculating unit 317-#3 performs the geolocation processing using the differences $\tau_{13\text{-}r(k)}$ and $f_{13\text{-}r(k)}$ calculated by the difference calculating unit 316-#3 to obtain a geolocation point $p_{13(k)}$ corresponding to the difference. A signal indicating the geolocation point $p_{13(k)}$ calculated by the geolocation point calculating unit 317-#3 is output to the geolocation point accumulating unit 304.

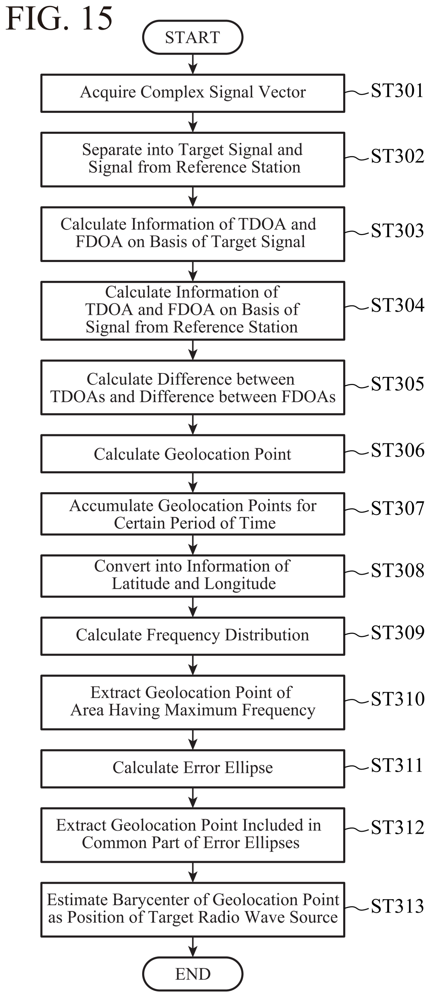

Next, an operation example of the positioning device 3 according to the third embodiment illustrated in FIG. 14 will be described with reference to FIG. 15.

The processing of steps ST301 and ST307 to ST313 in the positioning device 3 according to the third embodiment illustrated in FIG. 15 is similar to the processing of steps ST101 and ST104 to ST110 in the positioning device 3 according to the first embodiment illustrated in FIG. 3.

Then, on the basis of a complex signal vector acquired by the corresponding signal receiving unit 301, the signal separating unit 313 separates the target signal and the signal from the reference station 11 from the complex signal vector (step ST302).

The target signal obtained by the signal separating unit 313 is output to the first correlation processing unit 314. Further, the signal from the reference station 11 obtained by the signal separating unit 313 is output to the second correlation processing unit 315.

In FIG. 14, on the basis of a complex signal vector $x_{1(t)}$ acquired by the signal receiving unit 301-#1, the signal separating unit 313-#1 separates a target signal $x_{tar1(t)}$ and a signal $x_{ref1(t)}$ from the reference station 11 by using filter processing or the like in the frequency domain from the complex signal vector $x_{1(t)}$. The target signal $x_{tar1(t)}$ obtained by the signal separating unit 313-#1 is output to the first correlation processing unit 314-#1 and the first correlation processing unit 314-#3. Further, the signal $x_{ref1(t)}$ from the reference station 11 obtained by the signal separating unit 313-#1 is output to the second correlation processing unit 315-#1 and the second correlation processing unit 315-#3.

Furthermore, on the basis of a complex signal vector $x_2(t)$ acquired by the signal receiving unit 301-#2, the signal separating unit 313-#2 separates a target signal $x_{tar2(t)}$ and a signal $x_{ref2(t)}$ from the reference station 11 from the complex signal vector $x_2(t)$ by using filter processing or the like in the frequency domain. The target signal $x_{tar2(t)}$ obtained by the signal separating unit 313-#2 is output to the first correlation processing unit 314-#1 and the first correlation processing unit 314-#2. Further, the signal $x_{ref2(t)}$ from the reference station 11 obtained by the signal separating unit 313-#2 is output to the second correlation processing unit 315-#1 and the second correlation processing unit 315-#2.

Furthermore, on the basis of a complex signal vector $x_{3(t)}$ acquired by the signal receiving unit 301-#3, the signal separating unit 313-#3 separates a target signal $x_{tar3(t)}$ and a signal $x_{ref3(t)}$ from the reference station 11 from the complex signal vector $x_{3(t)}$ by using filter processing or the like in the frequency domain. The target signal $x_{tar3(t)}$ obtained by the signal separating unit 313-#3 is output to the first correlation processing unit 314-#2 and the first correlation processing unit 314-#3. Further, the signal $x_{ref3(t)}$ from the reference station 11 obtained by the signal separating unit 313-#3 is output to the second correlation processing unit 315-#2 and the second correlation processing unit 315-#3.

Next, the first correlation processing unit 314 calculates information of TDOA and FDOA by correlation processing between the target signals on the basis of the target signals obtained by the respective signal separating units 313 (step ST303).

Specifically, the first correlation processing unit 314 calculates information of TDOA and FDOA by extracting a peak value of CAF according to the method described in Non Patent Literature 1 as correlation processing between the target signals. Note that, when the target radio wave source 10 is a radar wave source, there is a plurality of peak values of CAF, and as a result, information of a plurality of TDOAs and FDOAs is calculated.

A signal indicating information of the TDOA and the FDOA calculated by the first correlation processing unit 314 is output to the difference calculating unit 316.

In FIG. 14, on the basis of the target signal $x_{tar1(t)}$ obtained by the signal separating unit 313-#1 and the target signal $x_{tar2(t)}$ obtained by the signal separating unit 313-#2, the first correlation processing unit 314-#1 calculates information of $TDOA_{\tau12(i)}$ and $FDOAf_{12(i)}$ by correlation processing between the target signals $x_{tar1(t)}$ and $x_{tar2(t)}$. Signals indicating the information of the $TDOA_{\tau12(i)}$ and the $FDOAf_{12(i)}$ calculated by the first correlation processing unit 314-#1 are output to the difference calculating unit 316-#1.

Further, on the basis of the target signal $x_{tar2(t)}$ obtained by the signal separating unit 313-#2 and the target signal $x_{tar3(t)}$ obtained by the signal separating unit 313-#3, the first correlation processing unit 314-#2 calculates information of $TDOA\tau_{23(j)}$ and $FDOAf_{23(j)}$ by correlation processing between the target signals $x_{tar2(t)}$ and $X_{tar3(t)}$. Signals indicating the information of the $TDOA\tau_{23(j)}$ and the $FDOAf_{23(j)}$ calculated by the first correlation processing unit 314-#2 are output to the difference calculating unit 316-#2.

Further, on the basis of the target signal $x_{tar1(t)}$ obtained by the signal separating unit 313-#1 and the target signal $x_{tar3(t)}$ obtained by the signal separating unit 313-#3, the first correlation processing unit 314-#3 calculates information of $TDOA\tau_{13(k)}$ and $FDOAf_{13(k)}$ by correlation processing between the target signals $x_{tar1(t)}$ and $X_{tar3(t)}$. Signals indicating the information of the $TDOA\tau_{13(k)}$ and the $FDOAf_{13(k)}$ calculated by the first correlation processing unit 314-#3 are output to the difference calculating unit 316-#3.

Further, on the basis of signals from the reference station 11 obtained by the respective signal separating units 313, the second correlation processing unit 315 calculates information of TDOA and FDOA by correlation processing between the signals (step ST304).

Specifically, the second correlation processing unit 315 calculates information of TDOA and FDOA by extracting a peak value of CAF in accordance with the method described in Non Patent Literature 1 as correlation processing between the signals. Note that, here, in a case where the reference station 11 is a radar wave source, there is a plurality of peaks in CAF, but since the position is known, TDOA and FDOA derived from the reference station 11 can be extracted.

Signals indicating the information of the TDOA and the FDOA calculated by the second correlation processing unit 315 is output to the difference calculating unit 316.

In FIG. 14, on the basis of the signal $x_{ref1(t)}$ from the reference station 11 obtained by the signal separating unit 313-#1 and the signal $x_{ref2(t)}$ from the reference station 11 obtained by the signal separating unit 313-#2, the second correlation processing unit 315-#1 calculates information of $TDOA\tau_{12r}$ and $FDOAf_{12r}$ by correlation processing between the signals $x_{ref1(t)}$ and $x_{ref2(t)}$. Signals indicating the information of the $TDOA\tau_{12r}$ and the $FDOAf_{12r}$ calculated by the second correlation processing unit 315-#1 are output to the difference calculating unit 316-#1.

Further, on the basis of the signal $x_{ref2(t)}$ from the reference station 11 obtained by the signal separating unit 313-#2 and the signal $x_{ref3(t)}$ from the reference station 11 obtained by the signal separating unit 313-#3, the second correlation processing unit 315-#2 calculates information of $TDOA\tau_{23r}$ and $FDOAf_{23r}$ by correlation processing between the signals $x_{ref2(t)}$ and $x_{ref3(t)}$. Signals indicating the information of the $TDOA\tau_{23r}$ and the $FDOAf_{23r}$ calculated by the second correlation processing unit 315-#2 are output to the difference calculating unit 316-#2.

Further, on the basis of the signal $x_{ref1(t)}$ from the reference station 11 obtained by the signal separating unit 313-#1 and the signal $x_{ref3(t)}$ from the reference station 11 obtained by the signal separating unit 313-#3, the second correlation processing unit 315-#3 calculates information of $TDOA\tau_{13r}$ and $FDOAf_{13r}$ by correlation processing between the signals $x_{ref1(t)}$ and $x_{ref3(t)}$. Signals indicating the information of the $TDOA\tau_{13r}$ and the $FDOAf_{13r}$ calculated by the second correlation processing unit 315-#3 are output to the difference calculating unit 316-#3.

Next, the difference calculating unit 316 calculates the difference between the TDOAs and the difference between the FDOAs on the basis of the information of the TDOAs and the FDOAs calculated by the first correlation processing unit 314 and the information of the TDOAs and the FDOAs calculated by the second correlation processing unit 315 (step ST305).

A signal indicating the difference calculated by the difference calculating unit 316 is output to the corresponding geolocation point calculating unit 317.

In FIG. 14, the difference calculating unit 316-#1 calculates a difference $\tau_{12-r(i)}$ between the $TDOA_{12(i)}$ calculated by the first correlation processing unit 314-#1 and the $TDOA\tau_{12r}$ calculated by the second correlation processing unit 315-#1, and a difference $f_{12-r(i)}$ between the $FDOA_{12(i)}$ calculated by the first correlation processing unit 314-#1 and the $FDOAf_{12r}$ calculated by the second correlation processing unit 315-#1 as in the following Expressions (37) and (40). Signals indicating the differences $\tau_{12-r(i)}$ and $f_{12-r(i)}$ calculated by the difference calculating unit 316-#1 are output to the geolocation point calculating unit 317-#1.

Further, the difference calculating unit 316-#2 calculates a difference $\tau_{23-r(j)}$ between the $TDOA_{23(j)}$ calculated by the first correlation processing unit 314-#2 and the $TDOA\tau_{23r}$ calculated by the second correlation processing unit 315-#2, and a difference $f_{23-r(j)}$ between the $FDOA_{23(j)}$ calculated by the first correlation processing unit 314-#2 and the $FDOAf_{23r}$ calculated by the second correlation processing unit 315-#2 as in the following Expressions (38) and (41). Signals

indicating the differences $\tau_{23\text{-r(i)}}$ and $f_{23\text{-r(i)}}$ calculated by the difference calculating unit 316-#2 are output to the geolocation point calculating unit 317-#2.

Further, the difference calculating unit 316-#3 calculates a difference $\tau_{13\text{-r(k)}}$ between the $\text{TDOA}_{13(k)}$ calculated by the first correlation processing unit 314-#3 and the $\text{TDOA}\tau_{13r}$ calculated by the second correlation processing unit 315-#3, and a difference $f_{13\text{-r(k)}}$ between the $\text{FDOA}_{13(k)}$ calculated by the first correlation processing unit 314-#3 and the $\text{FDOA}f_{13r}$ calculated by the second correlation processing unit 315-#3 as in the following Expressions (39) and (42). Signals indicating the differences $\tau_{13\text{-r(i)}}$ and $f_{13\text{-r(i)}}$ calculated by the difference calculating unit 316-#3 are output to the geolocation point calculating unit 317-#3.

$$\tau_{12-r\ (i)} = \tau_{12\ (i)} - \tau_{12r} \qquad (37)$$

$$\tau_{23-r(j)} = \tau_{23(j)} - \tau_{23r} \qquad (38)$$

$$\tau_{13-r\ (k)} = \tau_{13\ (k)} - \tau_{13r} \qquad (39)$$

$$f_{12-r\ (i)} = f_{12\ (i)} - f_{12r} \qquad (40)$$

$$f_{23-r\ (j)} = f_{23\ (j)} - f_{23r} \qquad (41)$$

$$f_{13-r\ (k)} = f_{13\ (k)} - f_{13r} \qquad (42)$$

As described above, in the positioning device 3 according to the third embodiment, the difference between the TDOA and the FDOA calculated from the two types of signals received by the same satellite 1 is obtained. Thus, in the positioning device 3 according to the third embodiment, it is possible to reduce offset errors of TDOA and FDOA caused by the satellite 1, represented by signal delay due to a circuit or the like in the satellite 1, frequency transition due to frequency conversion or the like, and the like.

Next, the geolocation point calculating unit 317 performs geolocation processing using the difference calculated by the difference calculating unit 316 to obtain a geolocation point corresponding to the difference (step ST306).

A signal indicating the geolocation point calculated by the geolocation point calculating unit 317 is output to the geolocation point accumulating unit 304.

In FIG. 14, the geolocation point calculating unit 317-#1 performs the geolocation processing using the differences $\tau_{12\text{-r(i)}}$ and $f_{12\text{-r(i)}}$ calculated by the difference calculating unit 316-#1 to obtain a geolocation point $p_{12(i)}$ corresponding to the difference. Specifically, the geolocation point calculating unit 317-#1 obtains the geolocation point $p_{12(i)}$ by solving simultaneous equations by the following Expressions (43), (44), and (7). A signal indicating the geolocation point $p_{12(i)}$ calculated by the geolocation point calculating unit 317-#1 is output to the geolocation point accumulating unit 304.

Further, the geolocation point calculating unit 317-#2 performs the geolocation processing using the differences $\tau_{23\text{-r(j)}}$ and $f_{23\text{-r(j)}}$ calculated by the difference calculating unit 316-#2 to obtain a geolocation point $p_{23(j)}$ corresponding to the difference. Specifically, the geolocation point calculating unit 317-#2 obtains the geolocation point $p_{23(j)}$ by solving simultaneous equations by the following Expressions (45), (46), and (7). A signal indicating the geolocation point $p_{23(j)}$ calculated by the geolocation point calculating unit 317-#2 is output to the geolocation point accumulating unit 304.

Further, the geolocation point calculating unit 317-#3 performs the geolocation processing using the differences $\tau_{13\text{-r(k)}}$ and $f_{13\text{-r(k)}}$ calculated by the difference calculating unit 316-#3 to obtain a geolocation point $p_{13(k)}$ corresponding to the difference. Specifically, the geolocation point calculating unit 317-#3 obtains the geolocation point $p_{13(k)}$ by solving simultaneous equations by the following Expressions (47), (48), and (7). A signal indicating the geolocation point $p_{13(k)}$ calculated by the geolocation point calculating unit 317-#3 is output to the geolocation point accumulating unit 304.

Note that, in the expressions (43) to (48), $f_{r0}$ represents the center frequency of the reference station 11, and $p_r$ represents the position of the reference station 11.

$$\tau_{12-r\ (i)} = \frac{1}{c}\left[\left\{\left|p_{12\ (i)} - p_{s1}\right| - \left|p_{12\ (i)} - p_{s2}\right|\right\} - \left\{\left|p_r - p_{s1}\right| - \left|p_r - p_{s2}\right|\right\}\right] \qquad (43)$$

$$f_{12-r\ (i)} = \frac{f_0}{c}\left\{\frac{v_{s1}\left(p_{12\ (i)} - p_{s1}\right)}{\left|p_{12\ (i)} - p_{s1}\right|} - \frac{v_{s2}\left(p_{12\ (i)} - p_{s2}\right)}{\left|p_{12\ (i)} - p_{s2}\right|}\right\} - \frac{f_{r0}}{c}\left\{\frac{v_{s1}(p_r - p_{s1})}{|p_r - p_{s1}|} - \frac{v_{s2}(p_r - p_{s2})}{|p_r - p_{s2}|}\right\} \quad (44)$$

$$\tau_{23-r\ (j)} = \frac{1}{c}\left[\left\{\left|p_{23\ (j)} - p_{s2}\right| - \left|p_{23\ (j)} - p_{s3}\right|\right\} - \left\{|p_r - p_{s2}| - |p_r - p_{s3}|\right\}\right] \quad (45)$$

$$f_{23-r\ (j)} = \frac{f_0}{c}\left\{\frac{v_{s2}\left(p_{23\ (j)} - p_{s2}\right)}{\left|p_{23\ (j)} - p_{s2}\right|} - \frac{v_{s3}\left(p_{23\ (j)} - p_{s3}\right)}{\left|p_{23\ (j)} - p_{s3}\right|}\right\} - \frac{f_{r0}}{c}\left\{\frac{v_{s2}(p_r - p_{s2})}{|p_r - p_{s2}|} - \frac{v_{s3}(p_r - p_{s3})}{|p_r - p_{s3}|}\right\} \quad (46)$$

$$\tau_{13-r\ (k)} = \frac{1}{c}\left[\left\{\left|p_{13\ (k)} - p_{s1}\right| - \left|p_{13\ (k)} - p_{s3}\right|\right\} - \left\{|p_r - p_{s1}| - |p_r - p_{s3}|\right\}\right] \quad (47)$$

$$f_{13-r\ (k)} = \frac{f_0}{c}\left\{\frac{v_{s1}\left(p_{13\ (k)} - p_{s1}\right)}{\left|p_{13\ (k)} - p_{s1}\right|} - \frac{v_{s3}\left(p_{13\ (k)} - p_{s3}\right)}{\left|p_{13\ (k)} - p_{s3}\right|}\right\} - \frac{f_0}{c}\left\{\frac{v_{s1}(p_r - p_{s1})}{|p_r - p_{s1}|} - \frac{v_{s3}(p_r - p_{s3})}{|p_r - p_{s3}|}\right\} \quad (48)$$

$$\left|p_{12\ (i)}\right| = \left|p_{23\ (j)}\right| = \left|p_{23\ (k)}\right| = R_E \quad (7)$$

Note that, in a case where the geolocation point $P_{12(i)}$ is obtained by Expressions (43), (44), and (7), the geolocation point $p_{23(j)}$ is obtained by Expressions (45), (46), and (7), and the geolocation point $p_{13(k)}$ is obtained by Expressions (47), (48), and (7), the offset error derived from the satellite 1 is reduced as compared with the case of using the geolocation point calculating unit 303 in the first embodiment. Therefore, in the positioning device 3 according to the third embodiment, the position of the target radio wave source 10 can be estimated with higher accuracy in the subsequent processing as compared with the first embodiment.

As described above, in the positioning device 3 according to the third embodiment, the signal from the reference station 11 whose position is known is used. Thus, in the positioning device 3 according to the third embodiment, it is possible to reduce offset errors related to TDOA and FDOA derived from the satellite 1, and it is possible to estimate the position of the target radio wave source 10 with higher accuracy as compared with a case where a signal from the reference station 11 is not used.

As described above, according to the third embodiment, the positioning device 3 includes: the plurality of signal receiving units 301 provided one by one for the plurality of satellites 1 to acquire a complex signal vector of a signal received by the satellite 1; the signal separating units 313 provided one by one for the signal receiving units 301 to separate a target signal and a signal from the reference station 11 from the complex signal vectors on the basis of the complex signal vectors acquired by the signal receiving unit 301; the first correlation processing unit 314 to calculate, on the basis of target signals acquired by the signal separating unit 313, information of TDOA and FDOA by correlation processing between the target signals; the second correlation processing unit 315 to calculate, on the basis of signals from the reference station 11 obtained by the signal separating unit 313, information of TDOA and FDOA by correlation processing between the signals; the difference calculating unit 316 to calculate a difference between TDOAs and a difference between FDOAs on the basis of the information of TDOA and FDOA calculated by the first correlation processing unit 314 and the information of TDOA and FDOA calculated by the second correlation processing unit 315; the geolocation point calculating unit 317 to calculate a geolocation point corresponding to the difference on the basis of the difference calculated by the difference calculating unit 316; the coordinate converting unit 306 to convert the geolocation point into information of latitude and longitude on the basis of geolocation points for a plurality of times calculated by the geolocation point calculating unit 317; the frequency distribution calculating unit 307 to calculate a frequency distribution of the geolocation point on the basis of the information of latitude and longitude obtained by the coordinate converting unit 306; the geolocation point extracting unit 308 to extract a geolocation point included in an area having a maximum frequency from the frequency distribution on the basis of the frequency distribution calculated by the frequency distribution calculating unit 307; and the position estimating unit to estimate a position of the target radio wave source 10 on the basis of the geolocation point extracted by the geolocation point extracting unit 308. Accordingly, the positioning device 3 according to the third embodiment can estimate the position of the target radio wave source 10 with higher accuracy in addition to the effects of the first embodiment.

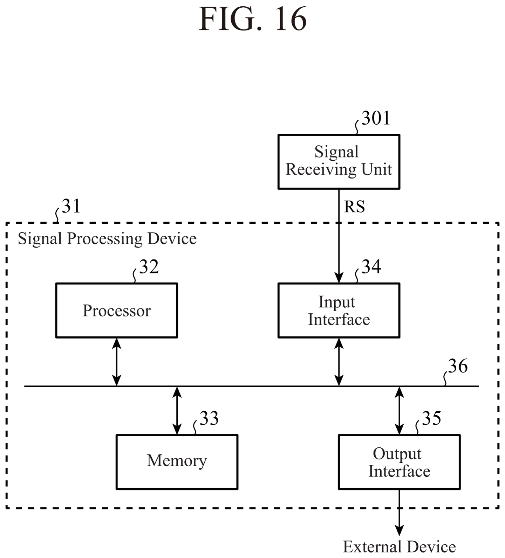

Finally, a hardware configuration example of the positioning device 3 according to the first to third embodiments will be described with reference to FIG. 16.

As illustrated in FIG. 16, a hardware configuration example of the positioning device 3 according to the first embodiment includes the signal receiving unit 301 and a signal processing device 31. The signal processing device 31 includes a processor 32, a memory 33, an input interface 34, an output interface 35, and a signal path 36.

In the configuration of the positioning device 3 according to the first embodiment, the correlation processing unit 302, the geolocation point calculating unit 303, the geolocation point accumulating unit 304, the accumulation time determining unit 305, the coordinate converting unit 306, the frequency distribution calculating unit 307, the geolocation point extracting unit 308, the error ellipse calculating unit 309, the common part calculating unit 310, and the barycenter calculating unit 311 only need to be implemented by the processor 32 including a large scale integrated circuit (LSI) such as an application specific integrated circuit (ASIC) or a field-programmable gate array (FPGA). Alternatively, the correlation processing unit 302, the geolocation point calculating unit 303, the geolocation point accumulating unit 304, the accumulation time determining unit 305, the coordinate converting unit 306, the frequency distribution calculating unit 307, the geolocation point extracting unit 308, the error ellipse calculating unit 309, the common part calculating unit 310, and the barycenter calculating unit 311 may be implemented by a single or a plurality of processors 32 including a central processing unit (CPU) or a graphics processing unit (GPU) that executes a computer program.

The memory 33 includes, for example, a program memory that stores various programs for implementing a signal processing function in the positioning device 3 according to the first embodiment, a work memory used when the processor 32 executes signal processing, and a memory in which data used in the signal processing is expanded. As the memory 33, it is sufficient if a plurality of semiconductor memories such as a read only memory (ROM) and a synchronous dynamic random access memory (SDRAM) is used.

Note that, in the example of FIG. 16, the single processor 32 is used, but embodiments are not limited thereto. A signal processing function in the positioning device 3 may be implemented using a plurality of processors 32 operating in cooperation with each other. Any of the correlation processing unit 302, the geolocation point calculating unit 303, the geolocation point accumulating unit 304, the accumulation time determining unit 305, the coordinate converting unit 306, the frequency distribution calculating unit 307, the geolocation point extracting unit 308, the error ellipse calculating unit 309, the common part calculating unit 310, and the barycenter calculating unit 311 may be configured by dedicated hardware.

As illustrated in FIG. 16, a hardware configuration example of the positioning device 3 according to the second embodiment includes the signal receiving unit 301 and the signal processing device 31. The signal processing device 31 includes the processor 32, the memory 33, the input interface 34, the output interface 35, and the signal path 36.

In the configuration of the positioning device 3 according to the second embodiment, the geolocation point extracting unit 312 only needs to be implemented by the processor 32 including an LSI such as an ASIC or an FPGA. Alternatively, the geolocation point extracting unit 312 may be implemented by a single or a plurality of processors 32 including a CPU or a GPU that executes a computer program.

The memory 33 includes, for example, a program memory that stores various programs for implementing a signal processing function in the positioning device 3 according to the second embodiment, a work memory used when the processor 32 executes signal processing, and a memory in which data used in the signal processing is expanded. As the memory 33, it is sufficient if a plurality of semiconductor memories such as a ROM and an SDRAM is used.

Note that, in the example of FIG. 16, the single processor 32 is used, but embodiments are not limited thereto. A signal processing function in the positioning device 3 may be implemented using a plurality of processors 32 operating in cooperation with each other. The geolocation point extracting unit 312 may be configured by dedicated hardware.

Note that the configuration of the positioning device 3 according to the second embodiment is similar to that of the positioning device 3 according to the first embodiment except for the geolocation point extracting unit 312.

As illustrated in FIG. 16, a hardware configuration example of the positioning device 3 according to the third embodiment includes the signal receiving unit 301 and the signal processing device 31. The signal processing device 31 includes the processor 32, the memory 33, the input interface 34, the output interface 35, and the signal path 36.

In the configuration of the positioning device 3 according to the second embodiment, the signal separating unit 313, the first correlation processing unit 314, the second correlation processing unit 315, the difference calculating unit 316, and the geolocation point calculating unit 317 only needs to be implemented by, for example, a processor 32 including an LSI such as an ASIC or an FPGA. Alternatively, the signal separating unit 313, the first correlation processing unit 314, the second correlation processing unit 315, the difference calculating unit 316, and the geolocation point calculating unit 317 may be implemented by a single or a plurality of processors 32 including a CPU or a GPU that executes a computer program.

The memory 33 includes, for example, a program memory that stores various programs for implementing a signal processing function in the positioning device 3 according to the third embodiment, a work memory used when the processor 32 executes signal processing, and a memory in which data used in the signal processing is expanded. As the memory 33, it is sufficient if a plurality of semiconductor memories such as a ROM and an SDRAM is used.

Note that, in the example of FIG. 16, the single processor 32 is used, but embodiments are not limited thereto. A signal processing function in the positioning device 3 may be implemented using a plurality of processors 32 operating in cooperation with each other. Any of the signal separating unit 313, the first correlation processing unit 314, the second correlation processing unit 315, the difference calculating unit 316, and the geolocation point calculating unit 317 may be configured by dedicated hardware.

Note that the configuration of the positioning device 3 according to the third embodiment is similar to that of the positioning device 3 according to the first embodiment except for the signal separating unit 313, the first correlation processing unit 314, the second correlation processing unit 315, the difference calculating unit 316, and the geolocation point calculating unit 317.

Note that free combinations of the individual embodiments, modifications of any components of the individual embodiments, or omissions of any components in the individual embodiments are possible.

INDUSTRIAL APPLICABILITY

The positioning device according to the present disclosure enables positioning of an unknown target radio wave source without using direction information regardless of a type of the unknown target radio wave source, and is suitable for use in a positioning device or the like that performs positioning of an unknown target radio wave source.

REFERENCE SIGNS LIST

1: satellite, 2: ground station antenna, 3: positioning device, 10: target radio wave source, 11: reference station, 31: signal processing device, 32: processor, 33: memory, 34: input interface, 35: output interface, 36: signal path, 301: signal receiving unit, 302: correlation processing unit, 303: geolocation point calculating unit, 304: geolocation point accumulating unit, 305: accumulation time determining unit, 306: coordinate converting unit, 307: frequency distribution calculating unit, 308: geolocation point extracting unit, 309: error ellipse calculating unit, 310: common part calculating unit, 311: barycenter calculating unit, 312: geolocation point extracting unit, 313: signal separating unit, 314: first correlation processing unit, 315: second correlation processing unit, 316: difference calculating unit, 317: geolocation point calculating unit

**Claims**

1. A positioning device comprising:

   a plurality of signal receiving units provided one by one for a plurality of satellites to acquire complex signal vectors of signals received by the satellites;
   a correlation processing unit to calculate information of TDOA and FDOA by correlation processing between relevant complex signal vectors on a basis of the complex signal vectors acquired by the signal receiving units;
   a geolocation point calculating unit to calculate a geolocation point corresponding to the TDOA and the FDOA on a basis of the information of the TDOA and the FDOA calculated by the correlation processing unit;
   a coordinate converting unit to convert, on a basis of geolocation points calculated for a plurality of time periods by the geolocation point calculating unit, the geolocation points into information of latitude and longitude;
   a frequency distribution calculating unit to calculate a frequency distribution of the geolocation point on a basis of the information of latitude and longitude obtained by the coordinate converting unit;
   a geolocation point extracting unit to extract a geolocation point included in an area having a maximum frequency from the frequency distribution on a basis of the frequency distribution calculated by the frequency distribution calculating unit; and
   a position estimating unit to estimate a position of a target radio wave source on a basis of the geolocation point extracted by the geolocation point extracting unit.

2. The positioning device according to claim 1, wherein

   the position estimating unit includes
   an error ellipse calculating unit to calculate an error ellipse that is an area where there is a possibility that the geolocation point is present for each of sets of the satellites on a basis of the geolocation point extracted by the geolocation point extracting unit.

3. The positioning device according to claim 2, wherein
   the position estimating unit includes:

a common part calculating unit to extract a geolocation point that is present in a common part of relevant error ellipses on a basis of the error ellipse calculated by the error ellipse calculating unit; and

a barycenter calculating unit to set a barycenter of the geolocation point as a position of a target radio wave source on a basis of the geolocation point extracted by the common part calculating unit.

**4.** A positioning device comprising:

a plurality of signal receiving units provided one by one for a plurality of satellites to acquire complex signal vectors of signals received by the satellites;

a correlation processing unit to calculate information of TDOA and FDOA by correlation processing between relevant complex signal vectors on a basis of the complex signal vectors acquired by the signal receiving units;

a geolocation point calculating unit to calculate a geolocation point corresponding to the TDOA and the FDOA on a basis of the information of the TDOA and the FDOA calculated by the correlation processing unit;

a coordinate converting unit to convert, on a basis of geolocation points calculated for a plurality of time periods by the geolocation point calculating unit, the geolocation points into information of latitude and longitude;

a frequency distribution calculating unit to calculate a frequency distribution of the geolocation point on a basis of the information of latitude and longitude obtained by the coordinate converting unit;

a geolocation point extracting unit to calculate a number of areas where a frequency is equal to or more than a threshold from the frequency distribution on a basis of the frequency distribution calculated by the frequency distribution calculating unit, and extract a geolocation point included in the areas; and

a position estimating unit to estimate a position of a target radio wave source on a basis of the geolocation point extracted by the geolocation point extracting unit.

**5.** The positioning device according to claim 4, wherein

the position estimating unit includes

a plurality of error ellipse calculating units to operate in parallel by the number calculated by the geolocation point extracting unit, and calculate an error ellipse that is an area where there is a possibility that the geolocation point is present for each of sets of the satellites on a basis of the geolocation point extracted by the geolocation point extracting unit.

**6.** The positioning device according to claim 5, wherein
the position estimating unit includes:

a plurality of common part calculating units to operate in parallel by the number calculated by the geolocation point extracting unit, and extract a geolocation point that is present in a common part of relevant error ellipses on a basis of the error ellipse calculated by the error ellipse calculating unit; and

a plurality of barycenter calculating units to operate in parallel by the number calculated by the geolocation point extracting unit, and set a barycenter of the geolocation point as a position of a target radio wave source on a basis of the geolocation point extracted by the common part calculating unit.

**7.** A positioning device comprising:

a plurality of signal receiving units provided one by one for a plurality of satellites to acquire complex signal vectors of signals received by the satellites;

signal separating units provided one by one for the signal receiving units to separate a target signal and a signal from a reference station from the complex signal vectors on a basis of the complex signal vectors acquired by the signal receiving units;

a first correlation processing unit to calculate, on a basis of target signals acquired by the signal separating unit, information of TDOA and FDOA by correlation processing between the target signals;

a second correlation processing unit to calculate, on a basis of signals from the reference station obtained by the signal separating unit, information of TDOA and FDOA by correlation processing between the signals;

a difference calculating unit to calculate a difference between TDOAs and a difference between FDOAs on a basis of the information of TDOA and FDOA calculated by the first correlation processing unit and the information of TDOA and FDOA calculated by the second correlation processing unit;

a geolocation point calculating unit to calculate a geolocation point corresponding to the difference on a basis of the difference calculated by the difference calculating unit;

a coordinate converting unit to convert, on a basis of geolocation points calculated for a plurality of time periods by the geolocation point calculating unit, the geolocation points into information of latitude and longitude;

a frequency distribution calculating unit to calculate a frequency distribution of the geolocation point on a basis of the information of latitude and longitude obtained by the coordinate converting unit;

a geolocation point extracting unit to extract a geolocation point included in an area having a maximum frequency from the frequency distribution on a basis of the frequency distribution calculated by the frequency distribution calculating unit; and

a position estimating unit to estimate a position of a target radio wave source on a basis of the geolocation point extracted by the geolocation point extracting unit.

8. The positioning device according to claim 7, wherein

the position estimating unit includes

an error ellipse calculating unit to calculate an error ellipse that is an area where there is a possibility that the geolocation point is present for each of sets of the satellites on a basis of the geolocation point extracted by the geolocation point extracting unit.

9. The positioning device according to claim 8, wherein
the position estimating unit includes:

a common part calculating unit to extract a geolocation point that is present in a common part of relevant error ellipses on a basis of the error ellipse calculated by the error ellipse calculating unit; and

a barycenter calculating unit to set a barycenter of the geolocation point as a position of a target radio wave source on a basis of the geolocation point extracted by the common part calculating unit.

10. A positioning method comprising:

a plurality of steps of acquiring, by signal receiving units provided one by one for a plurality of satellites, complex signal vectors of signals received by the satellites;

a step of calculating, by a correlation processing unit, information of TDOA and FDOA by correlation processing between relevant complex signal vectors on a basis of the complex signal vectors acquired by the signal receiving units;

a step of calculating, by a geolocation point calculating unit, a geolocation point corresponding to the TDOA and the FDOA on a basis of the information of the TDOA and the FDOA calculated by the correlation processing unit;

a step of converting, by a coordinate converting unit, on a basis of geolocation points calculated for a plurality of time periods by the geolocation point calculating unit, the geolocation points into information of latitude and longitude;

a step of calculating, by a frequency distribution calculating unit, a frequency distribution of the geolocation point on a basis of the information of latitude and longitude obtained by the coordinate converting unit;

a step of extracting, by a geolocation point extracting unit, a geolocation point included in an area having a maximum frequency from the frequency distribution on a basis of the frequency distribution calculated by the frequency distribution calculating unit; and

a step of estimating, by a position estimating unit, a position of a target radio wave source on a basis of the geolocation point extracted by the geolocation point extracting unit.

11. A positioning method comprising:

a plurality of steps of acquiring, by signal receiving units provided one by one for a plurality of satellites, complex signal vectors of signals received by the satellites;

a step of calculating, by a correlation processing unit, information of TDOA and FDOA by correlation processing between relevant complex signal vectors on a basis of the complex signal vectors acquired by the signal receiving units;

a step of calculating, by a geolocation point calculating unit, a geolocation point corresponding to the TDOA and the FDOA on a basis of the information of the TDOA and the FDOA calculated by the correlation processing unit;

a step of converting, by a coordinate converting unit, on a basis of geolocation points for a plurality of time periods calculated by the geolocation point calculating unit, the geolocation points into information of latitude and longitude;

a step of calculating, by a frequency distribution calculating unit, a frequency distribution of the geolocation point on a basis of the information of latitude and longitude obtained by the coordinate converting unit;

a step of calculating, by a geolocation point extracting unit, a number of areas where a frequency is equal to or more than a threshold from the frequency distribution on a basis of the frequency distribution calculated by the frequency distribution calculating unit, and extracting a geolocation point included in the areas; and

a step of estimating, by a position estimating unit, a position of a target radio wave source on a basis of the geolocation point extracted by the geolocation point extracting unit.

12. A positioning method comprising:

a plurality of steps of acquiring, by signal receiving units provided one by one for a plurality of satellites, complex signal vectors of signals received by the satellites;

a step of separating, by signal separating units provided one by one for the signal receiving units, a target signal and a signal from a reference station from the complex signal vectors on a basis of the complex signal vectors acquired by the signal receiving units;

a step of calculating, by a first correlation processing unit, on a basis of target signals acquired by the signal separating unit, information of TDOA and FDOA by correlation processing between the target signals;

a step of calculating, by a second correlation processing unit, on a basis of signals from the reference station obtained by the signal separating unit, information of TDOA and FDOA by correlation processing between the signals;

a step of calculating, by a difference calculating unit, a difference between TDOAs and a difference between FDOAs on a basis of the information of TDOA and FDOA calculated by the first correlation processing unit and the information of TDOA and FDOA calculated by the second correlation processing unit;

a step of calculating, by a geolocation point calculating unit, a geolocation point corresponding to the difference on a basis of the difference calculated by the difference calculating unit;

a step of converting, by a coordinate converting unit, on a basis of geolocation points calculated for a plurality of time periods by the geolocation point calculating unit, the geolocation points into information of latitude and longitude;

a step of calculating, by a frequency distribution calculating unit, a frequency distribution of the geolocation point on a basis of the information of latitude and longitude obtained by the coordinate converting unit;

a step of extracting, by a geolocation point extracting unit, a geolocation point included in an area having a maximum frequency from the frequency distribution on a basis of the frequency distribution calculated by the frequency distribution calculating unit; and

a step of estimating, by a position estimating unit, a position of a target radio wave source on a basis of the geolocation point extracted by the geolocation point extracting unit.

FIG. 1

# FIG. 2

2-#1    2-#2    2-#3

3

| Signal Receiving Unit 301-1# | Signal Receiving Unit 301-2# | Signal Receiving Unit 301-3# |
|---|---|---|

302

| Correlation Processing Unit 302-1# | Correlation Processing Unit 302-2# | Correlation Processing Unit 302-3# |
|---|---|---|

Correlation Processing Unit

303

| Geolocation Point Calculating Unit 303-1# | Geolocation Point Calculating Unit 303-2# | Geolocation Point Calculating Unit 303-3# |
|---|---|---|

Geolocation Point Calculating Unit

Accumulation Time Determining Unit

305

Geolocation Point Accumulating Unit — 304

Coordinate Converting Unit — 306

Frequency Distribution Calculating Unit — 307

Geolocation Point Extracting Unit — 308

Error Ellipse Calculating Unit — 309

Common Part Calculating Unit — 310

Barycenter Calculating Unit — 311

Positioning Device

# FIG. 3

START

Acquire Complex Signal Vector — ST101

Calculate Information of
TDOA and FDOA — ST102

Calculate Geolocation Point — ST103

Accumulate Geolocation Points for
Certain Period of Time — ST104

Convert into Information of
Latitude and Longitude — ST105

Calculate Frequency Distribution — ST106

Extract Geolocation Point of
Area Having Maximum Frequency — ST107

Calculate Error Ellipse — ST108

Extract Geolocation Point Included
in Common Part of Error Ellipses — ST109

Estimate Barycenter of
Geolocation Point as Position of
Target Radio Wave Source — ST110

END

# FIG. 4

| | $\Delta\phi_1$ | $\Delta\phi_2$ | $\Delta\phi_3$ | $\Delta\phi_4$ | $\Delta\phi_5$ | $\Delta\phi_6$ | $\cdots$ | $\Delta\phi_M$ |
|---|---|---|---|---|---|---|---|---|
| $\Delta\theta_1$ | | | | | | | | |
| $\Delta\theta_2$ | | | | | | | | |
| $\Delta\theta_3$ | | | | | | | | |
| $\Delta\theta_4$ | | | | | | | | |
| $\Delta\theta_5$ | | | | | | | | |
| $\Delta\theta_6$ | | | | | | | | |
| $\vdots$ | | | | | | | | |
| $\Delta\theta_N$ | | | | | | | | |

# FIG. 5

| | $\Delta\phi_1$ | $\Delta\phi_2$ | $\Delta\phi_3$ | $\Delta\phi_4$ | $\Delta\phi_5$ | $\Delta\phi_6$ | $\cdots$ | $\Delta\phi_M$ |
|---|---|---|---|---|---|---|---|---|
| $\Delta\theta_1$ | | | | | | | | |
| $\Delta\theta_2$ | | | | | | | | |
| $\Delta\theta_3$ | | | | | | | | |
| $\Delta\theta_4$ | | | | | | | | |
| $\Delta\theta_5$ | | | | | | | | |
| $\Delta\theta_6$ | | | | | | | | |
| $\vdots$ | | | | | | | | |
| $\Delta\theta_N$ | | | | | | | | |

51

# FIG. 6

# FIG. 7

| $\gamma^2$ | Presence Probability |
|------------|----------------------|
| 1.00175 | 0.394 |
| 4.60517 | 0.9 |
| 9.21034 | 0.99 |
| 13.81551 | 0.999 |
| 18.42068 | 0.9999 |
| 23.02585 | 0.99999 |

FIG. 8

EP 4 697 052 A1

# FIG. 9

FIG. 10

FIG. 11

2-#1  2-#2  2-#3

3

Positioning Device

| 301-1# Signal Receiving Unit | 301-2# Signal Receiving Unit | 301-3# Signal Receiving Unit |
|---|---|---|

302

Correlation Processing Unit

| 302-1# Correlation Processing Unit | 302-2# Correlation Processing Unit | 302-3# Correlation Processing Unit |
|---|---|---|

303

Geolocation Point Calculating Unit

| 303-1# Geolocation Point Calculating Unit | 303-2# Geolocation Point Calculating Unit | 303-3# Geolocation Point Calculating Unit |
|---|---|---|

305 — Accumulation Time Determining Unit

Geolocation Point Accumulating Unit — 304

Coordinate Converting Unit — 306

Frequency Distribution Calculating Unit — 307

Geolocation Point Extracting Unit — 312

309-1# | 309-2# | 309-K#

| Error Ellipse Calculating Unit | Error Ellipse Calculating Unit | ... | Error Ellipse Calculating Unit |
|---|---|---|---|

310-1# | 310-2# | 310-K#

| Common Part Calculating Unit | Common Part Calculating Unit | ... | Common Part Calculating Unit |
|---|---|---|---|

311-1# | 311-2# | 311-K#

| Barycenter Calculating Unit | Barycenter Calculating Unit | ... | Barycenter Calculating Unit |
|---|---|---|---|

# FIG. 12

```
START
  │
  ▼
┌─────────────────────────────────┐
│ Acquire Complex Signal Vector   │──── ST201
└─────────────────────────────────┘
  │
  ▼
┌─────────────────────────────────┐
│ Calculate Information of TDOA and FDOA │──── ST202
└─────────────────────────────────┘
  │
  ▼
┌─────────────────────────────────┐
│ Calculate Geolocation Point     │──── ST203
└─────────────────────────────────┘
  │
  ▼
┌─────────────────────────────────┐
│ Accumulate Geolocation Points for │──── ST204
│ Certain Period of Time          │
└─────────────────────────────────┘
  │
  ▼
┌─────────────────────────────────┐
│ Convert into Information of      │──── ST205
│ Latitude and Longitude          │
└─────────────────────────────────┘
  │
  ▼
┌─────────────────────────────────┐
│ Calculate Frequency Distribution │──── ST206
└─────────────────────────────────┘
  │
  ▼
┌─────────────────────────────────┐
│ Calculate Number of Areas Where  │
│ Frequency Is Equal to or More than │──── ST207
│ Threshold, and Extract Geolocation Point │
│ Included in Areas               │
└─────────────────────────────────┘
  │
  ▼
┌─────────────────────────────────┐
│ Calculate Error Ellipse for      │──── ST208
│ Each Number of Areas            │
└─────────────────────────────────┘
  │
  ▼
┌─────────────────────────────────┐
│ Extract Geolocation Point Included in │──── ST209
│ Common Part of Error Ellipses for │
│ Each Number of Areas            │
└─────────────────────────────────┘
  │
  ▼
┌─────────────────────────────────┐
│ Estimate Barycenter of Geolocation Point as │──── ST210
│ Position of Target Radio Wave Source for │
│ Each Number of Areas            │
└─────────────────────────────────┘
  │
  ▼
END
```

# FIG. 13

EP 4 697 052 A1

FIG. 14

Positioning Device

# FIG. 15

```
START
```

| | |
|---|---|
| Acquire Complex Signal Vector | ST301 |

| | |
|---|---|
| Separate into Target Signal and Signal from Reference Station | ST302 |

| | |
|---|---|
| Calculate Information of TDOA and FDOA on Basis of Target Signal | ST303 |

| | |
|---|---|
| Calculate Information of TDOA and FDOA on Basis of Signal from Reference Station | ST304 |

| | |
|---|---|
| Calculate Difference between TDOAs and Difference between FDOAs | ST305 |

| | |
|---|---|
| Calculate Geolocation Point | ST306 |

| | |
|---|---|
| Accumulate Geolocation Points for Certain Period of Time | ST307 |

| | |
|---|---|
| Convert into Information of Latitude and Longitude | ST308 |

| | |
|---|---|
| Calculate Frequency Distribution | ST309 |

| | |
|---|---|
| Extract Geolocation Point of Area Having Maximum Frequency | ST310 |

| | |
|---|---|
| Calculate Error Ellipse | ST311 |

| | |
|---|---|
| Extract Geolocation Point Included in Common Part of Error Ellipses | ST312 |

| | |
|---|---|
| Estimate Barycenter of Geolocation Point as Position of Target Radio Wave Source | ST313 |

```
END
```

# FIG. 16

Signal Receiving Unit (301)

RS

Signal Processing Device (31)

Processor (32)

Input Interface (34)

(36)

Memory (33)

Output Interface (35)

External Device

## INTERNATIONAL SEARCH REPORT

International application No.

**PCT/JP2023/018850**

### A. CLASSIFICATION OF SUBJECT MATTER

***G01S 5/02***(2010.01)i
FI:   G01S5/02 A

According to International Patent Classification (IPC) or to both national classification and IPC

### B. FIELDS SEARCHED

Minimum documentation searched (classification system followed by classification symbols)

G01S5/00-5/14; G01S19/00-19/55;

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2022-057630 A (MITSUBISHI ELECTRIC CORPORATION) 11 April 2022 (2022-04-11) paragraphs [0010], [0012], [0034], [0039], [0042], [0079]-[0080], [0092], [0101], fig. 2-3, 7 | 1-2, 4-5, 7-8, 10-12 |
| Y | JP 2015-152479 A (OSAKA GAS CO., LTD.) 24 August 2015 (2015-08-24) paragraph [0043], fig. 5 | 1-2, 4-5, 7-8, 10-12 |
| A | CN 101682394 A (GLOWLINK COMM TECNOLOGY INC.) 24 March 2010 (2010-03-24) entire text, all drawings | 1-12 |
| A | US 2015/0263872 A1 (THE BOEING COMPANY) 17 September 2015 (2015-09-17) entire text, all drawings | 1-12 |

☐ Further documents are listed in the continuation of Box C.    ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **15 June 2023** | **04 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/018850**

| Patent document cited in search report | | | Publication date (day/month/year) | Patent family member(s) | | | Publication date (day/month/year) |
|---|---|---|---|---|---|---|---|
| JP | 2022-057630 | A | 11 April 2022 | (Family: none) | | | |
| JP | 2015-152479 | A | 24 August 2015 | (Family: none) | | | |
| CN | 101682394 | A | 24 March 2010 | (Family: none) | | | |
| US | 2015/0263872 | A1 | 17 September 2015 | GB | 2499872 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAWORTH**. Interference localization for eutelsat satellites-the first european transmitter location system. *International journal of satellite communications*, 1997, vol. 15, 155-183
- **AMIJIMA, FUKUSHIMA, TAKAHASHI**. Removal of Ambiguity in Radar Pulses Using DOA in TDOA/FDOA Geolocation Using Two Satellites. *IEICE Technical Report SANE*, 2022

- **K C. HO** ; **Y. T. CHAN**. Geolocation of a known altitude object from TDOA and FDOA measurements. *IEEE Transactions on Aerospace and Electronic Systems*, July 1997, vol. 33 (3), 770-783